Europäisches Patentamt

European Patent Office

Office européen des brevets

(11) Numéro de publication: **0 497 071 B1**

(12) **FASCICULE DE BREVET EUROPEEN**

(45) Date de publication du fascicule du brevet: **06.12.95**

(51) Int. Cl.⁶: **C09C 1/40**, C09D 17/00, D21H 17/68, D21H 19/40

(21) Numéro de dépôt: **91403554.8**

(22) Date de dépôt: **27.12.91**

(54) **Nouveaux pigments à base de silico-aluminates leur procédé de préparation et leur utilisation comme charges notamment pour papier.**

(30) Priorité: **28.12.90 FR 9016421**

(43) Date de publication de la demande:
**05.08.92 Bulletin 92/32**

(45) Mention de la délivrance du brevet:
**06.12.95 Bulletin 95/49**

(84) Etats contractants désignés:
**AT CH DE ES FR GB IT LI NL SE**

(56) Documents cités:
**FR-A- 1 495 401**
**FR-A- 1 582 608**
**FR-A- 2 273 035**
**US-A- 3 915 734**

(73) Titulaire: **RHONE-POULENC CHIMIE**
**25, Ouai Paul Doumer**
**F-92408 Courbevoie Cédex (FR)**

(72) Inventeur: **Persello, Jacques**
**310 Chemin de Calice,**
**La Boisse**
**F-01120 Montluel (FR)**

(74) Mandataire: **Dubruc, Philippe et al**
**RHONE-POULENC CHIMIE,**
**Direction de la Propriété Industrielle,**
**25, Ouai Paul Doumer**
**F-92408 Courbevoie Cédex (FR)**

Rank Xerox (UK) Business Services
(3.10/3.09/3.3.3)

## Description

La présente invention concerne principalement de nouveaux pigments à base de silico-aluminates présentant une chimie de surface améliorée, un procédé pour leur obtention, et leur application comme charges, notamment pour papiers.

Elle concerne également, de manière incidente, certaines suspensions à base de silico-aluminates.

Plus précisément encore, l'invention concerne des pigments de silico-aluminates à rétention chimique d'une part, et à capacité d'adsorption, notamment vis à vis des encres pour papier, d'autre part, particulièrement élevées.

On sait que les silico-aluminates peuvent être utilisés de façon avantageuse dans la fabrication du papier, soit comme charge de masse pour des papiers courants type papiers journaux, soit comme charge de couchage pour des papiers spéciaux réclamant une plus haute qualité de surface, tels que par exemple les papiers pour imprimantes à jet d'encre couleur.

Incorporés dans la masse du papier, les silico-aluminates permettent d'améliorer significativement l'une ou plusieurs des propriétés suivantes : opacité, blancheur, densité, porosité, propriétés mécaniques, imprimabilité, etc...

Certains papiers, dits papiers spéciaux, doivent en outre présenter une très grande qualité de surface. C'est le cas par exemple des papiers pour imprimantes à jet d'encre couleur, auxquels on demande qu'ils permettent une reproduction couleur de grande définition. Cet état de surface peut alors être obtenu par couchage (enduction) des feuilles de papiers par des bains de couchage à base de silico-aluminates.

On sait que les améliorations des propriétés soit de masse soit de surface ainsi recherchées pour les papiers sont liées aux caractéristiques physiques de structure et de morphologie des silico-aluminates utilisés. Ces caractéristiques sont notamment la surface spécifique, la taille et le volume de pores, la tailles des agrégats et des agglomérats, qui doivent donc être convenablement ajustées selon le résultat visé.

Bien que les silico-aluminates mis au point à ce jour conviennent sur bien des points pour une application en papeterie, ils présentent encore néanmoins certains inconvénients.

Ainsi, par exemple, les silico-aluminates actuellement utilisés comme charge de masse présentent une rétention chimique qui peut paraître insuffisante. La rétention chimique quantifie l'aptitude du silico-aluminate à être retenu par adsoption sur les fibres de cellulose du papier; elle est définie, dans cette application, comme le rapport de la quantité de silico-aluminate effectivement adsorbée sur les fibres celluloses à la quantité totale de silico-aluminate utilisée lors de l'incorporation en masse. Cette faiblesse dans la rétention chimique nuit à l'économie du procédé, pose des problèmes de pollution et de recyclage des effluents, et diminue les propriétés finales du papier. Par ailleurs, les silico-aluminates actuellement utilisés comme charge de couchage ne présentent pas une qualité suffisante pour permettre d'une part un contrôle rigoureux de la pénétration superficielle des encres, et d'autre part une adsorption rapide de ceux-ci, deux conditions pourtant indispensables pour obtenir une reproduction dite à grande définition.

Un objet de la présente invention est donc de proposer de nouveaux pigments de silico-aluminates à rétention chimique et capacité d'adsorption, notamment vis à vis des encres, améliorées et donc parfaitement utilisables comme charges dans les formulations papetières.

Un autre objet de l'invention est un procédé permettant la préparation de tels pigments de silico-aluminates.

Or, il a été trouvé par la Demanderesse que certaines des propriétés recherchées pour les charges de masse ou les charges de couchage pour papiers dépendaient non seulement des caractéristiques structurelles des silico-aluminates utilisés, mais également de leur chimie de surface. En particulier, il a été trouvé que le contrôle de cette chimie de surface permettait d'influencer avantageusement des propriétés comme la rétention chimique et la capacité d'adsorption.

Cette découverte est à la base de la présente invention.

On a pu ainsi établir un certain nombre de conditions sur la surface des pigments de silico-aluminates, notamment au niveau du nombre et de la nature des sites de surface (cationiques ou anioniques) pour que ceux-ci présentent, par rapport à des pigments de silico-aluminates de l'art antérieur de structures pourtant équivalentes, les propriétés améliorées susmentionnées. On a pu également mettre au point un procédé de traitement de surface de pigments de silico-aluminates permettant d'accéder de manière simple aux nouveaux pigments à base de silico-aluminates selon l'invention.

Les pigments à base de silico-aluminates selon l'invention, utilisables notamment comme charges, sont caractérisés en ce qu'ils présentent une chimie de surface telle que le nombre de sites cationiques, exprimé en microMole par mètre carré de surface ($\mu$Mole/m$^2$) soit supérieur à 0,05.

D'autre part, le procédé de préparation des pigments de silico-aluminates selon l'invention, qui se ramène essentiellement à un procédé de traitement de surface de pigments de silico-aluminates, est caractérisé en ce qu'il consiste (a) à faire subir à une suspension de pigments de silico-aluminates présentant un pH d'au plus 8, un traitement avec un sel organique ou inorganique d'un élément métallique au moins divalent, (b) puis, à l'issue de ce traitement, à remonter le pH du milieu réactionnel à une valeur supérieure ou égale à 3,5, (c) à séparer ensuite les pigments de silico-aluminates dudit milieu, et (d) à enfin sécher les pigments de silico-aluminates obtenus.

L'invention concerne également les pigments de silico-aluminates obtenus ou susceptibles d'être obtenus par ce procédé.

Elle concerne aussi des suspensions de pigments de silico-aluminates qui peuvent être soit préparées directement à partir des pigments de silico-aluminates selon l'invention soit obtenues lors de la mise en oeuvre d'un procédé tel que ci-dessus, ces suspensions présentant la propriété remarquable d'être particulièrement stables dans le temps.

Enfin, l'invention concerne l'utilisation des pigments de silico-aluminates tels que décrits ci-dessus ou préparés selon le procédé qui vient d'être mentionné plus haut, comme charges pour papiers.

Mais d'autres caractéristiques, aspects et avantages de l'invention apparaîtront encore plus clairement à la lecture de la description qui va suivre, et des exemples concrets mais non limitatifs destinés à l'illustrer.

Comme cela été indiqué en introduction, les caractéristiques essentielles des pigments de silico-aluminates de l'invention résident dans leur chimie de surface. Plus précisément, un des aspects à prendre en compte dans cette chimie de surface est le nombre et la nature des sites de surface, et plus particulièrement le nombre de sites cationiques.

Ce nombre se mesure en microMole de sites cationiques par $m^2$ de surface des pigments.

En pratique, cette mesure se fait de la manière suivante :

le nombre de sites cationiques est déterminé par la quantité de surfactant anionique, utilisé comme molécule sonde, fixé par adsorption spécifique sur un silico-aluminate. L'adsorption est effectuée à un pH constant de 6,5 et pour une concentration en silico-aluminate exprimée en surface ($m^2$) telle que le rapport de concentrations entre le surfactant adsorbé sur le silico-aluminate et le surfactant en équilibre est égal à 1. Le nombre de sites est exprimé en microMole de sites pour 1 $m^2$ de silico-aluminate.

La mesure du nombre de sites est effectuée en deux ou plusieurs étapes. Dans un premier temps, on détermine un nombre approximatif de sites. Dans un deuxième temps, la quantité exacte de sites est déterminée en effectuant la mesure pour un rapport de concentrations entre le surfactant adsorbé sur le silico-aluminate et le surfactant en équilibre égal à 1.

1.1. Détermination du nombre approximatif de sites cationiques.

Une quantité $m_1$ (g) de pigments de silico-aluminate, préalablement séché à 120°C pendant 4 heures, est dispersée dans 50 g d'une solution aqueuse de Dioctylsulfosuccinate de sodium (DDS) à 10,00 $\mu$M/g. Le pH de la suspension est ajusté à 6,50 par ajout de solutions 0,10 M/l d'acide sulfurique ou d'hydroxyde de sodium. La masse $m_1$ de pigments de silico-aluminate est déterminée par la relation suivante :

$m_1$ = (30/S), où S est la surface spécifique du silico-aluminate en $m^2/g$ déterminée par la méthode BET et correspondant à la surface développée par les pores supérieurs à 1,3 nm.

La suspension ainsi constituée est agitée pendant 4 heures à 25°C. On centrifuge par la suite la suspension à 7500 t/mn pendant 60 mn et le surnageant obtenu est filtré sur filtre millipore de 0,22 $\mu$m. Une solution E1 est obtenue par ajout de 10,000 g de surnageant filtré dans 90,00 g d'eau bidistillée.

De la même façon, une solution témoin R1 est obtenue par ajout de 5,000 g de solution de Dioctylsulfosuccinate de sodium à 10 $\mu$M/g dans 95,00 g d'eau bidistillée.

Le surfactant anionique est dosé par turbitimétrie par addition d'une solution aqueuse de 1,5-dimethyl-1,5-diazaundecamethylene polymethobromide (PB) à 5 $\mu$M/g. Les turbidités des solutions E1 et R1 sont mesurées à 550 nm en fonction du volume de PB versé. Le point équivalent est déterminé par la quantité de PB versé correspondant au maximum de turbidité. Soient $V_{E1}$ et $V_{R1}$ les volumes de PB versés dans le cas des solutions E1 et R1 respectivement.

La quantité de DDS adsorbé sur le silico-aluminate est déterminée par la relation suivante :

$$Q_c = [500-(250.V_{E1}/V_{R1})]/30 \quad \text{(en } \mu\text{Mole/m}^2\text{)}$$

1.2. Détermination du nombre exacte de sites cationiques.

Une quantité m (g) de pigments de silico-aluminate, préalablement séchée à 120°C pendant 4 heures, est dispersée dans 50 g d'une solution aqueuse de Dioctylsulfosuccinate de sodium (DDS) à 10,00 $\mu$M/g. Le pH de la suspension est ajusté à 6,50 par ajout de solutions 0,10 M/l d'acide sulfurique ou d'hydroxyde de sodium.

La masse m de pigments de silico-aluminate est déterminée par la relation suivante :

$$m = \frac{250}{Q_C \cdot S}$$

La suspension ainsi constituée est agitée pendant 4 heures à 25°C. On centrifuge par la suite la suspension à 7500 t/mn pendant 60 mn et le surnageant obtenu est filtré sur filtre millipore de 0,22 $\mu$m.

Une solution E est obtenue par ajout de 10,000 g de surnageant filtré dans 90,00 g d'eau bidistillée.

De la même façon, une solution témoin R est obtenue par ajout de 5,000 g de solution de Dioctylsulfosuccinate de sodium à 10 $\mu$M/g dans 95,00 g d'eau bidistillée.

Le surfactant anionique est dosé par turbitimétrie par addition d'une solution aqueuse de 1,5-dimethyl-1,5-diazaundecamethylene polymethobromide (PB) à 5 $\mu$M/g. Les turbidités des solution E et R sont mesurées à 550 nm en fonction du volume de PB versé. Le point équivalent est déterminé par la quantité de PB versé correspondant au maximum de turbidité. Soient $V_E$ et $V_R$ les volumes de PB versés dans le cas des solutions E et R respectivement.

Le nombre de sites cationiques (en $\mu$Mole/m$^2$) est déterminé par la relation suivante :

$$N_C = [500-(250 \cdot V_E/V_R)]/m$$

Dans le cas présent, et comme déja indiqué, les pigments de silico-aluminates selon l'invention présentent un nombre de sites cationiques supérieur à 0,05.

Selon un mode préféré de réalisation de l'invention, ce nombre est au moins de 0,1 et encore plus préférentiellement d'au moins 0,2, et notamment compris entre 0,2 et 60.

Les pigments à base de silico-aluminates selon l'invention peuvent également présenter un certain nombre de sites anioniques distribués à leur surface. Ce nombre se mesure en microMoles de sites anioniques par m$^2$ de surface.

En pratique, cette mesure se fait de la manière suivante:

le nombre de sites anioniques est déterminé par la quantité de polyélectrolyte cationique, utilisé comme molécule sonde, fixé par adsoption spécifique sur un silico-aluminate.

2.1. Détermination du nombre approximatif de sites anioniques.

Une masse $m_1$ de pigments de silico-aluminate préalablement séchée à 120°C pendant 4 heures, est dispersée dans 50 g d'une solution aqueuse à 5,00 $\mu$M/g de 1,5-dimethyl-1,5-diazaundecamethylene polymethobromide (PB). Le pH de la suspension est ajusté à 8,5 par ajout d'acide sulfurique ou d'hydroxyde de sodium 0,1000 Mole/l.

La masse $m_1$ de pigments de silico-aluminate est déterminée par la relation suivante :

$m_1 = (15/S)$, où S est la surface spécifique du pigment de silico-aluminate en m$^2$/g déterminée par la méthode BET et correspond à la surface développée par les pores supérieurs à 1,3 nm.

La suspension ainsi constituée est agitée pendant 4 heures à 25°C.

On centrifuge par la suite la suspension à 7500 t/mn pendant 60 mn et le surnageant obtenu est filtré sur filtre millipore de 0,22 $\mu$m.

Une solution E1 est obtenue par ajout de 10,000 g de surnageant filtré dans 90,00 g d'eau bidistillée.

De la même façon, une solution témoin R1 est obtenue par ajout de 5,000 g de solution de 1,5-dimethyl-1,5-diazaundecamethylene polymethobromide à 5,00 $\mu$M/g dans 95,00 g d'eau bidistillée.

Le polyelectrolyte cationique est dosé par turbitimétrie par addition d'une solution aqueuse de Dioctylsulfosuccinate de sodium (DDS) à 10 $\mu$M/g. Les turbidités des solutions E1 et R1 sont mesurées à 550 nm en fonction du volume de DDS versé. Le point équivalent est déterminé par la quantité de DDS versé correspondant au maximum de turbidité. Soient $V_{E1}$ et $V_{R1}$ les volumes de DDS versés dans le cas des solutions E1 et R1 respectivement. La quantité de PB adsorbé sur le silico-aluminate est déterminée par la relation suivante :

$$Q_A = [250-(125.V_{E1}/V_{R1})]/15 \quad \text{(en } \mu\text{Mole/m}^2\text{)}$$

2.2. Détermination du nombre exact de sites anioniques.

Une masse m de pigments de silico-aluminate préalablement séchée à 120°C pendant 4 heures, est dispersée dans 50 g d'une solution aqueuse à 5,00 $\mu$M/g de 1,5-dimethyl-1,5-diazaundecamethylene polymethobromide (PB). Le pH de la suspension est ajusté à 8,0 par ajout d'acide sulfurique ou d'hydroxyde de sodium 0,1000 Mole/l.

La masse m de pigments de silico-aluminate est déterminée par la relation suivante :

$$m = \frac{125}{Q_A.S}$$

La suspension ainsi constituée est agitée pendant 4 heures à 25°C.

On centrifuge par la suite la suspension à 7500 t/mn pendant 60 mn et le surnageant obtenu est filtré sur filtre millipore de 0,22 $\mu$m.

Une solution E est obtenue par ajout de 10,000 g de surnageant filtré dans 90,00 g d'eau bidistillée.

De la même façon, une solution témoin R est obtenue par ajout de 5,000 g de solution de 1,5-dimethyl-1,5-diazaundecamethylene polymethobromide à 5,00 $\mu$M/g dans 95,00 g d'eau bidistillée.

Le polyelectrolyde cationique est dosé par turbitimétrie par addition d'une solution aqueuse de Dioctylsulfosuccinate de sodium (DDS) à 10 $\mu$M/g. Les turbidités des solutions E et R sont mesurées à 550nm en fonction du volume de DDS versé. Le point équivalent est déterminé par la quantité de DDS versé correspondant au maximum de turbidité. Soient $V_E$ et $V_R$ les volumes de DDS versés dans le cas des solutions E et R respectivement.

Le nombre de sites anioniques (en $\mu$Mole/m$^2$) est déterminé par la relation suivante :

$$N_A = 2[250-(125.V_E/V_R)]/m$$

Dans le cas présent, les pigments de silico-aluminates selon l'invention peuvent présenter un nombre de sites anioniques compris entre 5 et 120 $\mu$Mole/m$^2$, et plus particulièrement entre 10 et 60 $\mu$Mole/m$^2$.

D'autre part, le point de charge nulle ou PZC peut également être considéré comme une caractéristique des pigments de silico-aluminates de l'invention.

Ce point de charge nulle (PZC) est défini par le pH d'une suspension de silico-aluminate pour lequel la charge électrique de la surface du solide est nulle et ce quelle que soit la force ionique du milieu. Ce PZC mesure le pH réel de la surface, dans la mesure où celle-ci est libre de toutes impuretés de ce type ionique.

La charge électrique est déterminée par potentiométrie. Le principe de la méthode est basé sur le bilan global des protons adsorbés ou désorbés sur la surface du silico-aluminate à un pH donné.

A partir des équations décrivant le bilan global de l'opération, il est facile de montrer que la charge électrique C de la surface, prise par rapport à une référence correspondant à une charge de surface nulle, est donnée par l'équation :

$$C = \frac{F \cdot (H - OH)}{A.M}$$

dans laquelle :

A représente la surface spécifique du solide en m$^2$/g,

M est la quantité de solide dans la suspension en g,

F est le Faraday,

H ou OH représente la variation par unité de surface de l'excès d'ions $H^+$ ou $OH^-$ respectivement sur le solide.

La mesure expérimentale du PZC se fait de la manière suivante.

On utilise la méthode décrite par Berube et de Bruyn (J. Colloid Interface Sc. 1968, 27, 305).

Le pigment de silico-aluminate est lavé au préalable dans de l'eau déionisée de haute résistivité (10 Mega.Ohm.cm); séché puis dégazé.

On prépare une série de solutions à pHo 8,5 par ajout de KOH ou HNO3 et contenant un électrolyte indifférent (KNO3) a une concentration variable entre $10^{-5}$ et $10^{-1}$ mole/l.

A ces solutions on ajoute une masse donnée de pigments de silico-aluminate et on laisse le pH des suspensions obtenues se stabiliser sous agitation, à 25°C et sous azote pendant 24 heures ; soit pH'o sa valeur.

Des solutions étalons sont constituées par le surnageant obtenu par centrifugation pendant 30 mn à 10000 t/mn d'une partie de ces mêmes suspensions. Soit pH'o le pH de ces surnageants.

On ramène ensuite le pH d'un volume connu de ces suspensions et des solutions étalons correspondantes à pHo en rajoutant la quantité nécessaire de KOH et on laisse les suspensions et les solutions étalons se stabiliser pendant 4 heures.

Le dosage potentiométrique des suspensions est effectué à partir de pHo par addition d'acide nitrique jusqu'à pHf = 2,0.

Préférentiellement on procède par addition d'incrément d'acide correspondant à une variation de pH de 0,2 unité de pH. Après chaque addition, le pH est stabilisé pendant 1 mn.

Soit Vh.Nh le nombre d'équivalents d'acide pour parvenir à pHf.

A partir de pHo, on trace le terme (Vh.Nh - Voh.Noh) en fonction des pH incrémentés pour toutes les suspensions (3 forces ioniques au moins) et pour toutes les solutions étalons correspondantes.

Pour chaque valeur de pH (pas de 0,2 unité) on fait ensuite la différence entre la consommation de $H^+$ ou $OH^-$ pour la suspension et pour la solution étalon correspondante. On renouvelle cette opération pour toutes les forces ioniques.

Ceci donne le terme (H - OH) correspondant à la consommation en protons de la surface. La charge de surface est calculée par l'équation ci-dessus.

On trace ensuite les courbes charge de surface en fonction du pH pour toutes les forces ioniques considérées. Le PZC est défini par l'intersection des courbes.

On ajuste la concentration en silico-aluminate en fonction de la surface spécifique de celui-ci.

Par exemple, on utilise des suspensions à 2 % pour les silico-aluminates de 50 m2/g à 3 forces ioniques (0,1 ; 0,01 et 0,001 mole/l).

Le dosage est effectué sur 100 ml de suspension en utilisant de l'hydroxyde de potassium à 0,1 M.

Dans le cas de la présente invention, le PZC peut alors être compris entre 2 et 9, et plus particulièrement entre 3 et 7.

Comme cela apparaîtra plus clairement dans la suite de l'exposé, les caractéristiques de chimie de surface des pigments de silico-aluminates de l'invention, et plus particulièrement les fractions de sites cationiques et les fractions de sites anioniques à la surface desdits pigments, peuvent être modulées et contrôlées à volonté, et ceci grâce au procédé de préparation qui est décrit en détails ci-après. On peut en effet d'ores et déjà noter que le procédé de préparation des pigments de silico-aluminates de l'invention consiste essentiellement à doper en surface des pigments de silico-aluminate, au moyen d'un élément métallique au moins divalent. Cet élément métallique est, selon l'invention, chimiquement lié à cette surface.

L'existence de cette liaision chimique peut être appréhendée par le comportement du pigment de silico-aluminate lorsqu'il est mis dans une suspension aqueuse, dans l'eau par exemple, à pH 7. Dans ce cas, on n'observe pas de désorption de l'élément métallique ou qu'une désorption négligeable due à des traces d'élément métallique non lié chimiquement, ces traces pouvant résulter d'une préparation à une pureté moins poussée du silico-aluminate.

Il y a donc lieu de noter que l'élement métallique est lié à la surface des pigments de façon irréversible par des liaisons chimiques fortes, de type covalentes, et ceci contrairement à certains pigments de silico-aluminates de l'art antérieur dont la surface peut comporter un élément métallique, sous la forme d'un sel, non chimiquement lié ou adsorbé de façon réversible.

Selon un mode préféré de réalisation de l'invention, les pigments de silico-aluminates présentent alors un rapport [nombre de sites cationiques]/[nombre de sites cationiques + nombre de sites anioniques] compris entre 0,1 et 0,6, et plus particulièrement compris entre 0,1 et 0,4.

Outre les caractéristiques de chimie de surface qui viennent d'être décrites ci-dessus et qui conditionnent la rétention chimique et la capacité d'adsorption des pigments à base de silico-aluminates de l'invention, ainsi d'ailleurs que la stabilité des suspensions contenant de tels pigments, les pigments de silico-aluminates de l'invention peuvent présenter aussi des caractéristiques physiques qui les rendent particulièrement adaptés à une application comme charges pour papiers.

Ces caractéristiques, de type structurel, vont être décrites ci-dessous.

Les pigments de silico-aluminates de l'invention présentent généralement une surface spécifique BET comprise entre 1 et 300 $m^2/g$, de préférence entre 60 et 200 $m^2/g$.

La surface spécifique BET est déterminée selon la méthode BRUNAUER-EMMETT-TELLER décrite dans "The Journal of the American Chemical Society" vol. 60, page 309, February 1938 et selon la norme NF X11-622 (3.3).

Les pigments de silico-aluminates de l'invention peuvent présenter une prise d'huile comprise entre 10 et 500 $cm^3/100g$ de silico-aluminate, cette dernière étant déterminée selon la norme NFT 30-022 (mars 1953) en mettant en oeuvre le phtalate de dibutyle (DBP).

Plus précisément, la prise d'huile peut être comprise entre 100 et 400 $cm^3/100$ g.

Pour ce qui est des caractéristiques de porosité des pigments de silico-aluminates de l'invention, ces derniers peuvent présenter un volume poreux variant entre 1 et 10 $cm^3/g$ et plus particulièrement entre 2 et 5 $cm^3/g$ (porosimétrie au mercure).

Les silico-aluminates peuvent être, selon l'invention, d'origine naturelle, comme par exemple des koalins, ou bien d'origine synthétique, et ils peuvent être de type amorphe ou cristallin (zéolite). De préférence, il s'agit de silico-aluminates de synthèse, et plus particulièrement de silico-aluminates amorphes.

Selon un mode particulier de réalisation de l'invention, les pigments sont à base d'un silico-aluminate alcalin, notamment de sodium. Dans ce dernier cas, on peut citer les produits de formule :

$xNa_2O, Al_2O_3, ySiO_2, wH_2O$ dans laquelle x = 0,1 à 2 ; y = 1,5 à 16 ; w = 0,3 à 4.

Selon un mode de réalisation particulièrement préféré de la présente invention, les pigments de silico-aluminates sont revêtus d'une fine couche de silice précipitée ; le pigment à base de silico-aluminate selon l'invention est alors constitué d'un coeur ou support en silico-aluminate (phase majoritaire) sur la surface duquel se présente une couche fine de silice précipitée (phase minoritaire).

Selon la présente invention, l'expression pigment de silico-aluminate ou pigment à base de silico-aluminate doit donc s'entendre comme englobant deux variantes possibles et qui correspondent aux cas où (i) le pigment est essentiellement ou uniquement constitué de silico-aluminate et (ii) le pigment est constitué d'un coeur en silico-aluminate revêtu d'une mince couche de silice précipitée.

Le procédé de préparation des pigments à base de silico-aluminates de l'invention va maintenant être décrit plus particulièrement.

Comme indiqué plus haut, ce procédé consiste essentiellement, dans ses étapes (a) et (b), en un traitement chimique de surface, c'est-à-dire que seules les caractéristiques de chimie de surface des pigments de silico-aluminates à traiter sont modifiées par le traitement, et non leurs caractéristiques structurelles ou morphologiques.

La première étape (a) du traitement selon l'invention est donc opérée sur des suspensions, généralement aqueuses, de pigments de silico-aluminates.

Ces suspensions peuvent avoir été obtenues par tout moyen connu, et les silico-aluminates contenus dans ces suspensions peuvent être également de tout type connu, c'est-à-dire du type naturel ou synthétique, amorphe ou cristallin.

Selon une première variante de mise en oeuvre du procédé de préparation des pigments de silico-aluminates selon l'invention, on peut opérer la première étape du traitement sur des suspensions qui ont été obtenues simplement par mise en suspension de poudres de silico-aluminates soit naturelles soit préalablement synthétisées, ces silico-aluminates pouvant être, comme déjà signalé, du type amorphe ou cristallin.

Classiquement, cette mise en suspension se fait à pH compris entre 6 et 10, à une température d'environ 80° C, et ceci pour un extrait sec en silico-aluminate de l'ordre de 10 % en poids.

Les silico-aluminates de synthèse susmentionnés sont des produits déjà bien connus en soi et facilement synthétisables, comme cela va être rappelé ci-dessous pour les besoins de l'exposé.

On notera en particulier qu'une gamme étendue de silico-aluminates convenant pour la présente invention sont commercialisés par la Société RHONE-POULENC sous les noms de marque TIXOLEX ®.

Ils sont généralement obtenus, comme cela est bien connu, par réaction d'un silicate, notamment alcalin et en particulier de sodium, avec un sel d'aluminium, notamment de sulfate d'aluminium ou un aluminate, ce qui donne alors lieu à la formation d'une suspension de silico-aluminate précipité.

Cette réaction peut être conduite de manière quelconque (addition de sel d'aluminium sur un pied de cuve de silicate, addition simultanée totale ou partielle de sel d'aluminium et de silicate sur un pied de cuve d'eau ou de solutions de silicate, mûrissement, etc...), le choix se faisant essentiellement en fonction des caractéristiques physiques du silico-aluminate que l'on désire obtenir, comme cela est bien connu.

A l'issue de l'étape de précipitation, on procède alors à l'étape de séparation du silico-aluminate du milieu réactionnel selon tout moyen connu, filtre sous vide ou filtre presse par exemple.

On recueille ainsi un gâteau de silico-aluminate, qui est lavé si nécessaire.

Ce gâteau, ou s'il est délité, la suspension de délitage, est séché par tout moyen connu, notamment par atomisation. Le produit séché est broyé si nécessaire pour obtenir la granulométrie désirée.

Les suspensions de pigments de silico-aluminates sur lesquelles est opérée la première étape du procédé de préparation selon l'invention peuvent avoir été obtenues autrement que par mise en suspension de poudres de silico-aluminates soit naturelles soit présynthétisées, conformément à la première variante exposée ci-dessus.

Ainsi, selon une deuxième variante possible de mise en oeuvre du procédé de préparation des pigments de silico-aluminates de l'invention, les suspensions de pigments de silico-aluminates sur lesquelles est opérée la première étape du traitement de surface correspondent aux suspensions mêmes qui sont obtenues dans le cadre d'un procédé classique de synthèse d'un silico-aluminate de précipitation tel qu'il a été rappelé ci-avant ; une telle suspension peut donc être soit la suspension de silico-aluminate obtenue en fin de précipitation et avant filtration, soit la suspension de silico-aluminate obtenue après délitage du gâteau de filtration.

Selon cette seconde variante, le procédé de préparation des pigments de silico-aluminates de l'invention se ramène en fait à un procédé classique de synthèse d'un silico-aluminate de précipitation dans lequel on a simplement intégré au niveau d'au moins une de ses étapes (fin de précipitation et/ou délitage du gâteau de filtration), un traitement supplémentaire tel que défini plus en détails ci-après.

Dans ce cas, la ou les étapes antérieures ou postérieures au traitement conforme 'à l'invention ne correspondent alors ni plus ni moins qu'aux étapes classiques et connues qui sont mises en oeuvre dans tout procédé de préparation de silico-aluminates de précipitation.

Il est encore une fois important de bien noter que les silico-aluminates de l'invention obtenus par un tel procédé ne se distinguent des silico-aluminates qui seraient obtenus par le même procédé mais sans mise en oeuvre du traitement supplémentaire, que par des seules caractéristiques de chimie de surface et non par des caractéristiques physiques.

Il en découle que pour obtenir des silico-aluminates conformes à l'invention et présentant des caractéristisques de structure ou de morphologie désirées, il suffit de mettre en oeuvre un procédé classique et connu de préparation de silico-aluminates précipités dont on sait qu'il conduit aux silico-aluminates présentant les caractéristiques physiques voulues, mais dans lequel on aura en outre intégré l'étape du traitement conforme à l'invention. On notera que cette règle de correspondance entre les caractéristiques physiques du silico-aluminate non encore traité d'une part et du silico-aluminate traité d'autre part s'applique également à la première variante du procédé de préparation des silico-aluminates selon l'invention exposé ci-avant.

On notera enfin que lorsque l'on désire obtenir des pigments à base de silico-aluminate du type constitués d'un support en silico-aluminate enrobé d'une couche mince de silice précipitée, alors il suffit, par exemple, d'introduire dans les suspensions de silico-aluminate précitées un acide d'une part (acide sulfurique par exemple) et un silicate d'autre part (du silicate de sodium par exemple), ce par quoi on précipite de la silice à la surface des supports en alumino-silicate. On pourrait également procéder par hydrolyse d'un alkyl-silicate dans les suspensions précitées. Ces procédés sont décrits en détails dans la demande de brevet français publiée sous le numéro FR-A- 2 605 011, incluse ici à titre de référence.

Les suspensions de pigments de silico-aluminate à traiter selon l'invention, et obtenues selon l'une ou l'autre des variantes exposées ci-dessus, peuvent présenter une teneur en silico-aluminate variant de 5 à 50 % en poids, de préférence comprise entre 10 et 30 % en poids.

Selon l'invention, le pH de ces suspensions doit être inférieur ou égal à 8. Si nécessaire, on ramène donc le pH de la suspension initiale à une telle valeur par ajout d'acide.

Selon l'invention, on traite alors les suspensions de pigments de silico-aluminates précitées avec au moins un sel organique ou inorganique d'un élément métallique au moins divalent.

Parmi les éléments métalliques divalents utilisables, on peut plus particulièrement citer les éléments alcalino-terreux, tels que par exemple le magnésium, le calcium, le strontium et le baryum ; les terres rares, telles que par exemple le lanthane, le cérium et l'yttrium qui est assimilé ici à une terre rare ; le titane ; le zirconium ; le fer ; le nickel ; le zinc et l'aluminium. Cette liste n'est bien entendu nullement limitative.

EP 0 497 071 B1

Selon un mode particulier et préféré de mise en oeuvre du traitement selon l'invention, on utilise à titre d'élément métallique l'aluminium.

Selon l'invention, ces éléments se présentent sous la forme d'un de leurs sels, organiques ou inorganiques.

A titre de sels organiques, on peut citer notamment les sels d'acides carboxyliques ou polycarboxyliques, comme par exemple l'acide acétique, citrique, tartrique ou oxalique.

A titre de sels inorganiques, on peut citer notamment les halogénures et les oxyhalogénures, comme par exemple les chlorures et les oxychlorures ; les nitrates ; les phosphates ; les sulfates et les oxysulfates.

Il convient de noter, là encore, que cette liste de sels n'est bien entendu donnée qu'à titre purement illustratif.

Dans la pratique, les sels métalliques sont introduits dans les suspensions de pigments de silico-aluminates sous la forme de solutions, généralement aqueuses ; ces sels pourraient également, bien entendu, être introduits sous forme solide, leur dissolution intervenant alors après la mise en contact avec la suspension de pigments de silico-aluminates. De préférence, les solutions de sels métalliques sont introduites progressivement dans les suspensions, en une ou plusieurs étapes, et ceci de façon à avoir un traitement bien homogène.

La quantité d'élément métallique à introduire dans la suspension de pigments de silico-aluminate peut varier dans de très larges limites.

Dans la pratique, on peut utiliser une quantité d'élément métallique telle que, au niveau du pigment de silico-aluminate traité final, cet élément se retrouve à raison de 0,01 % à 30 % en poids, et plus particulièrement entre 0,5 et 5 % en poids, selon la surface spécifique du pigment.

Le mélange entre les suspensions et les sels métalliques peut être effectué à une température allant de l'ambiante à 100° C, et de préférence à une température supérieure à 60° C. Des températures comprises entre 60° et 80° C conviennent particulièrement bien.

Lors de l'introduction du sel métallique, le pH du milieu de réaction décroît progressivement.

Après que l'introduction du sel métallique soit terminée, on remonte alors, dans une seconde étape, le pH du milieu de réaction à une valeur supérieure ou égale à 3,5.

Cette remontée du pH est effectuée par ajout d'une base dans le milieu de réaction, par exemple au moyen d'une solution d'hydroxyde de sodium ou d'ammoniaque.

La température du milieu lors de cette seconde étape est avantageusement celle qui a été utilisée pour conduire la première étape du traitement.

A l'issue de cette seconde étape, il peut être avantageux de prévoir un mûrissement du milieu réactionnel. Ce mûrissement se fait alors généralement à la température à laquelle la seconde étape du traitement (étape de remontée du pH) a été conduite. La durée du mûrissement peut aller de quelques minutes à quelques heures, de préférence de 10 mn à 1 heure.

Eventuellement, à l'issue soit de la seconde étape soit du mûrissement précité, on peut enfin procéder à un dernier ajustement du pH, ce dernier ajustement étant destiné à fixer le pH du pigment de silico-aluminate fini, en fonction de l'application visée pour celui-ci.

A l'issue du traitement selon l'invention, le pigment traité est alors séparé du milieu de réaction selon tout moyen, filtre sous vide ou filtre presse par exemple.

On recueille ainsi un gâteau de pigments de silico-aluminates traités, qui peut être lavé si nécessaire, par exemple avec l'eau désionisée.

Ce gâteau de pigments de silico-aluminates traités, ou s'il est délité, la suspension de délitage de pigments de silico-aluminates traités, est séché par tout moyen connu, notamment par atomisation. Le produit séché est broyé si nécessaire pour obtenir la granulométrie désirée.

Comme déjà indiqué ci-avant, on constate donc que les dernières étapes du procédé de préparation des pigments de silico-aluminates de l'invention ne sont en fait que des étapes classiques mises en oeuvre dans tout procédé de synthèse d'un silico-aluminate précipité.

A l'issue du procédé de synthèse selon l'invention, on recueille des pigments de silico-aluminates dont la chimie de surface est profondément modifiée par rapport aux pigments de silico-aluminates classiques de l'art antérieur. Ainsi, le dopage chimique en élément métallique qui a été réalisé à la surface du pigment entraîne une modification du nombre et de la nature des sites de surface, qu'ils soient cationiques ou anioniques, modification qui se traduit par une amélioration des propriétés du pigment de silico-aluminates, comme cela ressortira clairement des exemples donnés ci-après.

Les paramètres qui permettent de contrôler, c'est-à-dire augmenter ou diminuer, le nombre et les proportions de sites cationiques et anioniques à la surface des pigments selon l'invention sont essentiellement les suivants : le taux d'éléments métalliques introduits ; le pH initial de la suspension à traiter,c'est à dire le pH éxistant avant que l'on ait éventuellement ramener celui-ci à une valeur inférieure ou égale à 8

9

pour conduire le traitement ; le pH de la suspension prête à être traitée ; et le pH atteint lorsque l'on procède à la remontée en pH de la suspension traitée (étape b du procédé).

On notera enfin que les suspensions (ou slurries) de pigments de silico-aluminates qui sont obtenues soit par mise en suspension directe des pigments de silico-aluminates selon l'invention soit à l'issue des étapes (a) et (b) du traitement selon l'invention exposé ci-avant, constituent en elles-mêmes des compositions particulièrement intéressantes.

En effet, ces suspensions de pigments de silico-aluminates traités présentent l'avantage remarquable d'être très stables au cours du temps, et non gélifiantes.

Ceci facilite grandement le transport et le stockage des suspensions en vue d'une utilisation directe comme bains de couchage pour papier.

Dans l'art antérieur qui est illustré par exemple par la demande de brevet français FR 2 628 341, pour éviter la tendance à la sédimentation et à la gélification des suspensions de silico-aluminates, on est obligé de faire appel à divers additifs. Les suspensions de silico-aluminates traités selon l'invention permettent donc d'obvier aux inconvénients liés à une telle utilisation.

Pour augmenter encore la stabilité de suspensions selon l'invention, il est généralement avantageux de procéder à un broyage humide, notamment au moyen d'un broyeur à bille, de ces dernières, de manière à ramener la taille des particules à une taille convenable.

Des exemples illustrant l'invention vont maintenant être donnés, ainsi qu'une définition préalable des tests utilisés pour quantifier d'une part la capacité d'adsorption et d'autre part la rétention chimique des silico-aluminates.

## Description du test d'adsorption d'encre

Les encres correspondant à chaque couleur élementaire, magenta, jaune et bleu (encre HEWLETT PACKARD) sont diluées cent fois dans de l'eau permutée. On constitue ainsi trois solutions initiales M, J et B.

On introduit 1 g de pigments de silico-aluminate dans 10 ml de chacune des trois solutions et on laisse agiter pendant 5 mn à 25°C .

Les suspensions sont ensuite centrifugées à 7 500 t/mn pendant 30 mn et les surnageants sont filtrés sur filtre millipore 0.22 micron.

Les concentrations en colorant restant en solution après adsorption, sont déterminées par spectrophotométrie visible au trois longueurs d'ondes suivantes : 548, 360 et 630 nm. Le taux de colorant adsorbé est déterminé par le rapport :

% ads = (aire du pic du surnageant/aire du pic de la solution d'origine) x 100.

## Description du test de rétention chimique sur cellulose

Ce test consiste à mesurer la quantité de silico-aluminate retenue par adsorption chimique sur les fibres d'une cellulose en utilisant un protocole décrit plus en détails par Unbehend J.E. dans Tappi 1977,60-(7)110-112 et modifié pour l'adapter à la mesure de la rétention des silico-aluminates. Les silico-aluminates sont impérativement broyés à un diamètre moyen inférieur ou égal à 5,0 micron (mesuré sur un appareil type CILAS). Les mesures sont effectuées sur une cellulose de composition 40 % feuillus et 60 % résineux, de demande cationique égale à 74 microéquivalents/g de cellulose.

Une suspension X est préparée par dispersion dans 300 g d'eau épurée, d'une masse de 10 g (pesée exactement) de cellulose sèche de composition 40 % Feuillus / 60 % Résineux. Cette suspension est homogénéisée sous agitation à une vitesse de 1600 t/mn, en utilisant une turbine type "défloculeuse", pendant 45 mn à 25 °C. Une solution Y est préparée par dissolution dans 189 g d'eau épurée, d'une masse de 1g (pesée exactement) de silico-aluminate micronisé ($\zeta$ moyen < 5 $\mu$m) et sèchée 12h à 120°C.

La solution Y est ensuite incorporée dans la suspension X toujours sous agitation, afin d'avoir une parfaite homogénéisation du milieu ; le pH est ajusté à une valeur de 6,0 à l'aide d'une solution de soude ou d'acide sulfurique 0,10 M/l.

L'ensemble est défloculé pendant 30 mn à 25°C puis versé dans un appareil type Jar Mark 4. La suspension est agitée à 600 t/mn pendant 10 mn. La suspension est ensuite filtrée sous agitation et sous vide pour récupérer 100 ml de filtrat E.

De la même façon, on prépare une suspension de référence en dispersant 10,0 g de cellulose dans 490 g d'eau. Cette suspension est homogénéisée sous agitation à une vitesse de 1600 t/mn, en utilisant une turbine type "défloculeuse", pendant 45 mn à 25°C. Le pH est ajusté à une valeur de 6,0 à l'aide d'une solution de soude ou d'acide sulfurique 0,10 M/l et l'ensemble est défloculé pendant 30 mn à 25°C puis versé dans un appareil type Jar Mark 4. La suspension est agitée à 600 t/mn pendant 10 mn. La suspension est ensuite filtrée sous agitation et sous vide pour récupérer 100 ml de filtrat R.

Les 100 ml de filtrat R sont placés dans un creuset de masse $m_0$, préalablement calciné à 900°C pendant 5h et refroidit dans un dessicateur ; soit $m_1$ la masse de l'ensemble. L'ensemble est porté à 120°C pendant 12h dans une étuve ventilée pour éliminer toute l'eau ; soit $m_2$ la masse de l'ensemble obtenu après sèchage. Celui-ci est ensuite calciné à 900°C pendant 5h et pesé après refroidissement dans un dessicateur ; soit $m_3$ la masse du creuset + silico-aluminate.

La même opération est effectuée pour le filtrat E. Environ 100 ml de filtrat E sont placés dans un creuset de masse $M_0$, préalablement calciné à 900°C pendant 5h et refroidit dans un déssicateur ; soit $M_1$ la masse de l'ensemble. L'ensemble est porté à 120°C pendant 12h dans une étuve ventilée pour éliminer toute l'eau ; soit $M_2$ la masse de l'ensemble obtenu après sèchage. Celui-ci est ensuite calciné à 900°C pendant 5h et pesé après refroidissement dans un dessicateur ; soit $M_3$ la masse du creuset + silico-aluminate.

Le pourcentage en masse de minéraux extraits de la cellulose par ce procédé et contenus dans le filtrat est déterminé par la relation suivante :

$$P_R = (m_3 - m_0) \times 100/m_1$$

Le taux de rétention exprimé par le rapport entre la masse de silico-aluminate adsorbé sur les fibres de cellulose et le silicoaluminate introduit est donné par la relation :

$$T_R = \frac{100 \left[ 0,20 - P_R - \dfrac{100 (M_3 - M_0)}{M1} \right]}{0,20}$$

Exemple 1 (référence)

Dans un réacteur équipe, d'un système de régulation de température et de pH et d'un système d'agitation par Mixel, on introduit 1,80 l de silicate de sodium de concentration en silice de 130 g/l et de rapport molaire $SiO_2/Na_2O = 3,5$ et 21,50 l d'eau permutée de conductivité 1 $\mu S/cm$. Après la mise en marche de l'agitation (350 t/mn), le pied de cuve ainsi constitué est chauffé à 85°C.

Lorsque la température est atteinte, on procède à l'addition d'acide sulfurique de concentration 80 g/l avec un débit constant de 0,16 l/mn pour amener le pH à 9,2.

On procède par la suite à l'addition simultanée pendant 50 mn, de 30,0 l de silicate de sodium de concentration en silice de 130 g/l, de rapport molaire $SiO_2/Na_2O = 3,5$ et de débit égal à 0,600 l/mn et de 19,50 l d'une solution de sulfate d'Aluminium à 123,33 g/l en $Al_2(SO_4)_3$, $18H_2O$. Le débit du sulfate d'aluminium est ajusté de manière à maintenir le pH du milieu réactionnel à une valeur constante de 9,2. Apres 50 mn d'addition, on arrête l'addition de sulfate d'aluminium et on procède à l'addition simultanée de 6,00 l de silicate de sodium de concentration en silice de 130 g/l, de rapport molaire $SiO2/Na2O = 3,5$ et de débit égale à 0,600 l/mn et de 7,00 l d'acide sulfurique à 80 g/l. Le débit d'acide sulfurique est ajusté de manière à maintenir le pH du milieu réactionnel à une valeur constante de 9,2. En fin d'addition, on arrête l'ajout de silicate de sodium et on continu l'ajout d'acide sulfurique avec un débit de 0,417 l/mn jusqu'à stabiliser le pH du mélange réactionnel à 5,0. On réalise par la suite un mûrissement de 15 mn à ce pH.

Pendant le mûrissement, le pH est maintenu à 5,0 par ajout d'acide.

Après arrêt du chauffage, le mélange est filtré et le gâteau obtenu est lavé à l'eau déionisée jusqu'à obtenir un silico-aluminate de taux de sulfate de sodium inférieur à 1,5 %. Le gâteau est ensuite délité pour former un slurry à 20 % de silico-aluminate.

Le silico-aluminate est ensuite sèché par atomisation. On procède enfin à un broyage du silico-aluminate obtenu sur un broyeur à jet d'air pour obtenir une diamètre moyen de 3 $\mu m$.

Les caractéristiques physico-chimiques du silico-aluminate ainsi obtenu sont regroupées dans le tableau I ci-après.

Exemple 2 : Préparation d'un silico-aluminate dopé par 10,5 % en poids d'aluminium.

10 Kg du slurry à 20 % de silico-aluminate, issu de l'exemple 1, sont dispersés dans l'eau pour former une suspension à 10 % de silico-aluminate. Cette suspension est ensuite chauffée à 65 °C. Lorsque la température est atteinte, on ajuste le pH du slurry à 5,0 par addition d'acide sulfurique à 80 g/l. On procède par la suite à l'addition de 3,50 l de solution de sulfate d'aluminium de concentration en $Al_2(SO_4)_3$, $18H_2O$ de 504,50 g/l avec un débit de 0,500 l/mn. On procède par la suite à une addition de NaOH à 180 g/l avec un débit de 0,560 l/mn pour amener le pH du milieu ainsi constitué à 8,0. On réalise par la suite un mûrissement de 60 mn à 65°C.

En fin de mûrissement, le pH du mélange réactionnel est ajusté à 4,5 par ajout d'acide sulfurique à 80 g/l et on réalise par la suite un mûrissement de 20 mn à ce pH.

Après arrêt du chauffage, le mélange est filtré et le gâteau obtenu est lavé à l'eau déionisée jusqu'à obtenir un silico-aluminate de taux de sulfate de sodium inférieur à 1,5 %. Le gâteau est ensuite délité pour former un slurry à 35 % de silico-aluminate.

Une partie du slurry de silico-aluminate ainsi obtenu est sèchée par atomisation pour obtenir un silico-aluminate sous forme de poudre. On procède enfin à un broyage du silico-aluminate obtenu sur un broyeur à jet d'air pour obtenir un diamètre moyen de 3 $\mu$m. Les caractéristiques physico-chimiques du silico-aluminate ainsi obtenu sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 8 l/h. Les caractéristiques du slurry de silico-aluminate ainsi obtenu sont les suivantes :

| | |
|---|---|
| Extrait sec en % poids : | 35 |
| Diamètre moyen en $\mu$m : | 3,0 |
| Viscosité plastique en mPa.s : | 25 |
| Seuil d'écoulement en Pa : | 5 |
| Stabilité après 4 mois : | aucune sédimentation |

Exemple 3 : Préparation d'un silico-aluminate dopé par 9,5 % en poids d'aluminium.

Dans un réacteur équipé d'un système de régulation de température et de pH et d'un système d'agitation par mixel, on introduit 1,80 l de silicate de sodium de concentration en silice de 130 g/l et de rapport molaire $SiO_2/Na_2O = 3,5$ et 21,50 l d'eau permutée de conductivité 1 $\mu$S/cm. Après la mise en marche de l'agitation (350 t/mn), le pied de cuve ainsi constitué est chauffé à 85°C.

Lorsque la température est atteinte, on procède à l'addition d'acide sulfurique de concentration 80 g/l avec un débit constant de 0,16 l/mn pour amener le pH à 9,2.

On procède par la suite à l'addition simultanée pendant 50 mn, de 30,0 l de silicate de sodium de concentration en silice de 130 g/l, de rapport molaire $SiO_2/Na_2O = 3,5$ et de débit égal à 0,600 l/mn et de 19,50 l d'une solution de sulfate d'Aluminium à 123,33 g/l en $Al_2(SO_4)_3$, $18H_2O$. Le débit du sulfate d'aluminium est ajusté de manière à maintenir le pH du milieu réactionnel à une valeur constante de 9,2.

Après 50 mn d'addition, on arrête l'addition de sulfate d'aluminium et on procède à l'addition simultanée de 6,00 l de silicate de sodium de concentration en silice de 130 g/l, de rapport molaire $SiO_2/Na_2O = 3,5$ et de débit égal à 0,600 l/mn et de 7,00 l d'acide sulfurique à 80 g/l. Le débit d'acide sulfurique est ajusté de manière à maintenir le pH du milieu réactionnel à une valeur constante de 9,2.

En fin d'addition, on arrête l'ajout de silicate de sodium et on continu l'ajout d'acide sulfurique avec un débit de 0,417 l/mn jusqu'à stabiliser le pH du mélange réactionnel à 5,0. On réalise, par la suite un mûrissement de 15 mn à de pH. Pendant le mûrissement, le pH est maintenu à 5,0 par ajout d'acide.

En fin de mûrissement, le pigment de silico-aluminate subit un traitement de surface selon le protocole suivant :

Lorsque la température du mélange réactionnel atteint la valeur de 65°C, on ajoute 7,20 l de solution de sulfate d'aluminium de concentration en $Al_2(SO_4)_3$, $18H_2O$ de 504,50 g/l avec un débit de 0,320 l/mn. On procède par la suite à une addition de NaOH à 180 g/l avec un débit de 0,560 l/mn pour amener le pH du milieu ainsi constitué à 8,0. On réalise par la suite un mûrissement de 60 mn à 65°C.

En fin de mûrissement, le pH du mélange réactionnel est ajusté à 4,2 par ajout d'acide sulfurique à 80 g/l, puis on réalise un mûrissement de 15 mn.

Après arrêt du chauffage, le mélange est filtré et le gâteau obtenu est lavé à l'eau déionisée jusqu'à obtenir un silico-aluminate de taux de sulfate de sodium inférieur à 1,5 %. Le gâteau est ensuite délité pour former un slurry à 35 % de silico-aluminate.

Une partie du slurry du silico-aluminate ainsi obtenu, est sèchée par atomisation pour obtenir un silico-aluminate sous forme de poudre. On procède enfin à un broyage du silico-aluminate obtenu sur un broyeur à jet d'air pour obtenir une diamètre moyen de 3 $\mu$m.

Les caractéristiques physico-chimiques du silico-aluminate ainsi obtenu sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 8 l/h. Les caractéristiques du slurry de silico-aluminate ainsi obtenu sont les suivantes :

| | |
|---|---|
| Extrait sec en % poids : | 35 |
| Diamètre moyen en $\mu$m : | 3,0 |
| Viscosité plastique en mPa.s : | 20 |
| Seuil d'écoulement en Pa : | 0 |
| Stabilité après 4 mois : | aucune sédimentation |

Exemple 4 : Préparation d'un silico-aluminate dopé par 10 % en poids d'aluminium.

2 Kg de silico-aluminate de type TIXOLEX ® 34 (produit commercialisé par RHONE-POULENC) sont dispersés dans 18 Kg d'eau, par agitation mécanique (Turbine à 1500 t/mn), pour former une suspension à 10 % de silico-aluminate. La suspension ainsi formée, est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. La suspension obtenue après broyage, est ensuite chauffée à 65°C. Lorsque la température est atteinte, on ajuste le pH du slurry à 5,0 par addition d'une solution aqueuse d'acide sulfurique à 80 g/l. On procède par la suite à l'addition de 3,50 l de solution de sulfate d'aluminium de concentration en $Al_2(SO_4)_3, 18H_2O$ de 504,50 g/l avec un débit de 0,500 l/mn. On procède par la suite à une addition de NaOH à 180 g/l avec un débit de 0,560 l/mn pour amener le pH du milieu ainsi constitué à 8,0. On réalise par la suite un mûrissement de 60 mn à 65°C.

En fin de mûrissement, le pH du mélange réactionnel est ajusté à 4,5 par ajout d'acide sulfurique à 80 g/l, et on réalise par la suite un mûrissement de 20 mn à ce pH.

Après arrêt du chauffage, le mélange est filtré et le gâteau obtenu est lavé à l'eau déionisée jusqu'à obtenir un silico-aluminate de taux de sulfate de sodium inférieur à 1,5 %. Le gâteau est ensuite délité pour former un slurry à 35 % de silico-aluminate.

Une partie du slurry du silico-aluminate ainsi obtenu, est sèchée par atomisation pour obtenir un silico-aluminate sous forme de poudre. On procède enfin à un broyage du silico-aluminate obtenu sur un broyeur à j'et d'air pour obtenir une diamètre moyen de 3 $\mu$m.

Les caractéristiques physico-chimiques du silico-aluminate ainsi obtenu sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 8 l/h. Les caractéristiques du slurry de silico-aluminate ainsi obtenu sont les suivantes :

| | |
|---|---|
| Extrait sec en % poids : | 25 |
| Diamètre moyen en $\mu$m : | 3,0 |
| Viscosité plastique en mPa.s : | 25 |
| Seuil d'écoulement en Pa : | 5 |
| Stabilité après 4 mois : | aucune sédimentation |

13

Exemple 5 :

A titre comparatif, on a consigné dans le tableau II ci-dessous les caractéristiques de deux silico-aluminates commerciaux classiques.

TABLEAU II

| SILICO-ALUMINATES | $S_{BET}$ m²/g | $N_c$ $\mu$M/m² | $N_A$ $\mu$M/m² | $T_R$ % | $A_E$ % |
|---|---|---|---|---|---|
| PASILEX [1] | 90 | 0,03 | 8 | 7 | 0 |
| TIXOLEX 34 [2] | 85 | 0,05 | 9 | 7 | 0 |

(1) silico-aluminate commercialisé par la Société DEGUSSA
(2) silico-aluminate commercialisé par la Société RHONE-POULENC.

## TABLEAU I
### CARACTERISTIQUES DES SILICO-ALUMINATES

| SILICO ALUMINATES | $S_{BET}$ m²/g | PRISE D'HUILE ml/100g | VOLUME POREUX cm³/g | NC $\mu$M/m² | NA $\mu$M/m² | PZC | TR % | AE % |
|---|---|---|---|---|---|---|---|---|
| Ex. 1 | 130 | 220 | 2,10 | 0,05 | 16 | 2,00 | 10 | 5 |
| Ex. 2 (a) | 120 | 210 | 1,90 | 1,50 | 10 | 3,20 | 75 | 75 |
| Ex. 3 (b) | 110 | 210 | 2,10 | 1,70 | 11 | 3,50 | 70 | 85 |
| Ex. 4 (c) | 80 | 200 | 1,90 | 1,60 | 11 | 3,10 | 65 | 85 |

Origine de la suspension traitée :

(a) gâteau de filtration
(b) bouillie de précipitation
(c) poudre

**Revendications**
**Revendications pour les Etats contractants suivants : AT, CH, DE, FR, GB, IT, LI, NL, SE**

1. Pigments à base de silico-aluminates caractérisés en ce qu'ils présentent une chimie de surface telle que le nombre de sites cationiques, exprimé en microMole/m$^2$ de surface, soit supérieur à 0,05.

2. Pigments selon la revendication 1, caractérisés en ce que ledit nombre de sites cationiques est d'au moins 0,1 microMole/m$^2$.

3. Pigments selon la revendication 2, caractérisés en ce que ledit nombre de sites cationiques est compris entre 0,2 et 60 microMole/m$^2$.

4. Pigments selon l'une quelconque des revendications précédentes, caractérisés en ce que leur point de charge nulle (PZC) est compris entre 2 et 9.

5. Pigments selon la revendication 4, caractérisés en ce que ledit point de charge nulle est compris entre 3 et 7.

6. Pigments selon l'une quelconque des revendications précédentes, caractérisés en ce que le nombre de sites anioniques, exprimé en microMole/m$^2$ de surface, est compris entre 5 et 120.

7. Pigments selon la revendication 6, caractérisés en ce que ledit nombre de sites anioniques est compris entre 10 et 60 microMole/m$^2$.

8. Pigments selon l'une quelconque des revendications précédentes, caractérisés en ce que le rapport [nombre de sites cationiques]/[nombre de sites cationiques + nombres de sites anioniques] est compris entre 0,1 et 0,6, et plus particulièrement entre 0,1 et 0,4.

9. Pigments selon l'une quelconque des revendications précédentes, caractérisés en ce qu'ils présentent une surface spécifique BET comprise entre 1 et 300 m$^2$/g.

10. Pigments selon la revendication 9, caractérisée en ce que ladite surface BET est comprise entre 60 et 200 m$^2$/g.

11. Pigments selon l'une quelconque des revendications précédentes, caractérisés en ce qu'ils présentent une prise d'huile DBP comprise entre 10 et 500 cm$^3$/100 g.

12. Pigments selon la revendication 11, caractérisés en ce que ladite prise d'huile est comprise entre 100 et 400 cm$^3$/100 g.

13. Pigments selon l'une quelconque des revendications précédentes, caractérisés en ce qu'ils présentent un volume poreux compris entre 1 et 10 cm$^3$/g.

14. Pigments selon la revendication 13, caractérisés en ce que ledit volume poreux est compris entre 2 et 5 cm$^3$/g.

15. Pigments selon l'une quelconque des revendications précédentes, caractérisés en ce qu'ils contiennent au moins un élément métallique au moins divalent, chimiquement lié à leur surface.

16. Pigments selon la revendication 15, caractérisés en ce que la teneur en élément métallique est comprise entre 0,01 et 30 % en poids.

17. Pigments selon la revendication 16, caractérisés en ce que ladite teneur est comprise entre 0,5 et 5 % en poids.

18. Pigments selon l'une des revendications 15 à 17, caractérisés en ce que ledit élément métallique est choisi parmi les alcalino-terreux, les terres rares, l'yttrium, le titane, le zirconium, le fer, le nickel, le zinc et l'aluminium.

**19.** Pigments selon la revendication 18, caractérisés en ce que ledit élément métallique est l'aluminium.

**20.** Pigments selon l'une quelconque des revendications précédentes, caractérisés en ce qu'il s'agit d'un silico-aluminate de synthèse amorphe

**21.** Pigments selon l'une quelconque des revendications précédentes, caractérisés en ce qu'ils sont constitues d'un support en silico-aluminate revêtu d'une fine couche de silice precipitée.

**22.** Procédé de synthèse de pigments à base de silico-aluminates tels que notamment définis à l'une quelconque des revendications précédentes, caractérisé en ce qu'il consiste (a) à faire subir à une suspension de pigments à base de silico-aluminates présentant un pH d'au plus 8, un traitement avec un sel organique ou inorganique d'un élément métallique au moins divalent, (b) puis, à l'issue de ce traitement, à remonter le pH du milieu réactionnel à une valeur supérieure ou égale à 3,5, (c) à séparer ensuite les pigments à base de silico-aluminates dudit milieu, et (d) à enfin sécher les pigments a base de silico-aluminates obtenus.

**23.** Procédé selon la revendication 22, caractérisé en ce que ladite suspension de pigments à base de silico-aluminates a été obtenue par mise en suspension d'une poudre de silico-aluminates naturelle ou présynthétisée, eventuellement suivie d'une étape de précipitation de silice à la surface dudit alumino-silicate.

**24.** Procédé selon la revendication 22, caractérisé en ce que ladite suspension de silice a été obtenue par délitage d'un gâteau de filtration issu d'une réaction de précipitation de silico-aluminate, eventuellement suivi d'une étape de précipitation de silice à la surface dudit alumino-silicate.

**25.** Procédé selon la revendication 22, caractérisé en ce que ladite suspension de silice est la suspension directement obtenue à l'issue d'une réaction de précipitation de silico-aluminate, eventuellement suivie d'une étape de précipitation de silice à la surface dudit alumino-silicate.

**26.** Procédé selon l'une quelconque des revendications 22 à 25, caractérisé en ce que ledit sel organique est choisi parmi les sels d'acides carboxyliques et polycarboxyliques, et ledit sel inorganique parmi les halogénures, les oxyhalogénures, les nitrates, les phosphates, les sulfates et les oxysulfates.

**27.** Procédé selon l'une quelconque des revendications 22 à 26, caractérisé en ce que ledit élément métallique au moins divalent est choisi parmi les alcalinoterreux, les terres rares, l'yttrium, le titane, le zirconium, le fer, le nickel, le zinc et l'aluminium.

**28.** Procédé selon la revendication 27, caractérisé en ce que l'élément métallique au moins divalent est l'aluminium.

**29.** Procédé selon l'une quelconque des revendications 22 à 28, caractérisé en ce que ledit traitement est opéré à une température comprise entre l'ambiante et 100°C, de préférence à une température comprise entre 60 et 80°C.

**30.** Procédé selon l'une quelconque des revendications 22 à 29, caractérisé en ce que, à l'issue de l'étape (b), on procède à un mûrissement du milieu réactionnel.

**31.** Procédé selon l'une quelconque des revendications 22 à 30, caractérisé en ce que, à l'issue de l'étape (b), suivie éventuellement d'un mûrissement, on procéde à un ajustement du pH du milieu réactionnel de manière à fixer le pH des pigments à base de silico-aluminates finis.

**32.** Pigments à base de silico-alunimates susceptibles d'être obtenus par un procédé tel que défini à l'une quelconque des revendications 22 à 31.

**33.** Pigments à base de silico-aluminates obtenus par un procédé tel que défini à l'une quelconque des revendications 22 à 31.

**34.** Suspension de pigments à base de silico-aluminates, caractérisée en ce qu'elle comprend des pigments à base de silico-aluminates tels que définis à l'une quelconque des revendications 1 à 21, 32 et 33.

**35.** Suspension de pigments à base de silico-aluminates telle qu'obtenue après la mise en oeuvre de l'étape (b) et avant la mise en oeuvre de l'étape (c) d'un procédé tel que défini à l'une quelconque des revendications 22 à 31.

**36.** Suspension de pigments à base de silico-aluminates telle qu'obtenue après la mise en oeuvre de l'étape (c) et avant la mise en oeuvre de l'étape (d) d'un procédé tel que défini à l'une quelconque des revendications 22 à 31.

**37.** Utilisation de pigments à base de silico-aluminates tels que définis à l'une quelconque des revendications 1 à 21, 32 et 33, comme charge pour papier.

**38.** Utilisation d'une suspension de pigments à base de silicoaluminates telle que définie à l'une quelconque des revendications 34 à 36, comme bain de couchage pour papier.

**Revendications pour l'Etat contractant suivant : ES**

**1.** Procédé de synthèse de pigments à base de silico-aluminates présentant une chimie de surface telle que le nombre de sites cationiques, exprimé en microMole/m$^2$ de surface, soit supérieur à 0,05, caractérisé en ce qu'il consiste (a) à faire subir à une suspension de pigments à base de silico-aluminates présentant un pH d'au plus 8, un traitement avec un sel organique ou inorganique d'un élément métallique au moins divalent, (b) puis, à l'issue de ce traitement, à remonter le pH du milieu réactionnel à une valeur supérieure ou égale à 3,5, (c) à séparer ensuite les pigments à base de silico-aluminates dudit milieu, et (d) à enfin sécher les pigments à base de silico-aluminates obtenus.

**2.** Procédé selon la revendication 1, caractérisé en ce que ledit nombre de sites cationiques est d'au moins 0,1 microMole/m$^2$.

**3.** Procédé selon la revendication 2, caractérisé en ce que ledit nombre de sites cationiques est compris entre 0,2 et 60 microMole/m$^2$.

**4.** Procédé selon l'une quelconque des revendications précédentes, caractérisé en ce que lesdits pigments synthétisés présentent un point de charge nulle (PZC) compris entre 2 et 9.

**5.** Procédé selon la revendication 4, caractérisé en ce que ledit point de charge nulle est compris entre 3 et 7.

**6.** Procédé selon l'une quelconque des revendications précédentes, caractérisé en ce que lesdits pigments synthétisés présentent un nombre de sites anioniques, exprimé en microMole/m$^2$ de surface, compris entre 5 et 120.

**7.** Procédé selon la revendication 6, caractérisé en ce que ledit nombre de sites anioniques est compris entre 10 et 60 microMole/m$^2$.

**8.** Procédé selon l'une quelconque des revendication précédentes, caractérisé en ce que lesdits pigments synthétisés présentent un rapport [nombre de sites cationiques]/[nombre de sites cationiques + nombres de sites anioniques] compris entre 0,1 et 0,6, et plus particulièrement entre 0,1 et 0,4.

**9.** Procédé selon l'une quelconque des revendications précédentes, caractérisé en ce que lesdits pigments synthétisés présentent une surface spécifique BET comprise entre 1 et 300 m$^2$/g.

**10.** Procédé selon la revendication 9, caractérisé en ce que ladite surface BET est comprise entre 60 et 200 m$^2$/g.

17

**11.** Procédé selon l'une quelconque des revendications précédentes, caractérisé en ce que lesdits pigments obtenus présentent une prise d'huile DBP/100 g comprise entre 10 et 500 $cm^3$/100 g.

**12.** Procédé selon la revendication 11, caractérisé en ce que ladite prise d'huile est comprise entre 100 et 400 $cm^3$/100 g.

**13.** Procédé selon l'une quelconque des revendications précédentes, caractérisé en ce que lesdits pigments synthétisés présentent un volume poreux compris entre 1 et 10 $cm^3$/g.

**14.** Procédé selon la revendication 13, caractérisé en ce que ledit volume poreux est compris entre 2 et 5 $cm^3$/g.

**15.** Procédé selon l'une quelconque des revendications précédentes, caractérisé en ce que lesdits pigments synthétisés contiennent au moins un élément métallique au moins divalent, chimiquement lié à leur surface.

**16.** Procédé selon la revendication 15, caractérisé en ce que la teneur en élément métallique est comprise entre 0,01 et 30 % en poids.

**17.** Procédé selon la revendication 16, caractérisé en ce que ladite teneur est comprise entre 0,5 et 5 % en poids.

**18.** Procédé selon l'une des revendications 15 à 17, caractérisé en ce que ledit élément métallique est choisi parmi les alcalino-terreux, les terres rares, l'yttrium, le titane, le zirconium, le fer, le nickel, le zinc et l'aluminium.

**19.** Procédé selon la revendication 18, caractérisé en ce que ledit élément métallique est l'aluminium.

**20.** Procédé selon l'une quelconque des revendications précédentes, caractérisé en ce que lesdits pigments synthétisés sont des silico-aluminates de synthèse amorphes.

**21.** Procédé selon l'une quelconque des revendications précédentes, caractérisé en ce que lesdits pigments synthétisés sont constitués d'un support en silico-aluminate revêtu d'une fine couche de silice précipitée.

**22.** Procédé selon l'une quelconque des revendications 1 à 21, caractérisé en ce que ladite suspension de pigments à base de silico-aluminates a été obtenue par mise en suspension d'une poudre de silico-aluminates naturelle ou présynthétisée, éventuellement suivie d'une étape de précipitation de silice à la surface dudit alumino-silicate.

**23.** Procédé selon l'une quelconque des revendication 1 à 21, caractérisé en ce que ladite suspension de silice a été obtenue par délitage d'un gâteau de filtration issu d'une réaction de précipitation de silico-aluminate, éventuellement suivi d'une étape de précipitation de silice à la surface dudit alumino-silicate.

**24.** Procédé selon l'une quelconques des revendications 1 à 21, caractérisé en ce que ladite suspension de silice est la suspension directement obtenue à l'issue d'une réaction de précipitation de silico-aluminate, éventuellement suivie d'une étape de précipitation de silice à la surface dudit alumino-silicate.

**25.** Procédé selon l'une quelconque des revendications 1 à 24, caractérisé en ce que ledit sel organique est choisi parmi les sels d'acides carboxyliques, les oxyhalogénures, les nitrates, les phosphates, les sulfates et les oxysulfates.

**26.** Procédé selon l'une quelconque des revendications 1 à 25, caractérisé en ce que ledit élément métallique au moins divalent est choisi parmi les alcalino-terreux, les terres rares, l'yttrium, le titane, le zirconium, le fer, le nickel, le zinc et l'aluminium.

**27.** Procédé selon la revendication 26, caractérisé en ce que l'élément métallique au moins divalent est l'aluminium.

**28.** Procédé selon l'une quelconque des revendication 1 à 27, caractérisé en ce que ledit traitement est opéré à une température comprise entre l'ambiante et 100 °C, de préférence à une température comprise entre 60 et 80 °C.

**29.** Procédé selon l'une quelconque des revendications 1 à 28, caractérisé en ce que, à l'issue de l'étape (b), on procède à un mûrissement du milieu réactionnel.

**30.** Procédé selon l'une quelconque des revendication 1 à 29, caractérisé en ce que, à l'issue de l'étape (b), suivie éventuellement d'un mûrissement, on procède à un ajustement du pH du milieu réactionnel de manière à fixer le pH des pigments à base de silico-aluminates finis.

**31.** Suspension de pigments à base de silico-aluminates, caractérisée en ce qu'elle comprend des pigments à base de silico-aluminates obtenus par un procédé tel que défini à l'une quelconque des revendications 1 à 30.

**32.** Suspension de pigments à base de silico-aluminates telle qu'obtenue après la mise en oeuvre de l'étape (b) et avant la mise en oeuvre de l'étape (c) d'un procédé tel que défini à l'une quelconque des revendications 1 à 30.

**33.** Suspension de pigments à base de silico-aluminates telle qu'obtenue après la mise en oeuvre de l'étape (c) et avant la mise en oeuvre de l'étape (d) d'un procédé tel que défini à l'une quelconque des revendications 1 à 30.

**34.** Utilisation de pigments à base de silico-aluminates obtenus par un procédé tel que défini à l'une quelconque des revendications 1 à 30, comme charge pour papier.

**35.** Utilisation d'une suspension de pigments à base de silico-aluminates telle que définie à l'une quelconque des revendications 31 à 33, comme bain de couchage pour papier.

**Claims**
**Claims for the following Contracting States : AT, CH, DE, FR, GB, IT, LI, NL, SE**

**1.** Pigments based on silico-aluminates, characterised in that they have a surface chemistry such that the number of cationic sites, expressed as micromole/$m^2$ of surface, is greater than 0.05.

**2.** Pigments according to Claim 1, characterised in that said number of cationic sites is at least 0.1 micromole/$m^2$.

**3.** Pigments according to Claim 2, characterised in that said number of cationic sites is between 0.2 and 60 micromole/$m^2$.

**4.** Pigments according to any one of the preceding claims, characterised in that their point zero charge (PZC) is between 2 and 9.

**5.** Pigments according to Claim 4, characterised in that said point zero charge is between 3 and 7.

**6.** Pigments according to any one of the preceding claims, characterised in that the number of anionic sites, expressed in micromole/$m^2$ of surface, is between 5 and 120.

**7.** Pigments according to Claim 6, characterised in that said number of anionic sites is between 10 and 60 micromole/$m^2$.

**8.** Pigments according to any one of the preceding claims, characterised in that the ratio [number of cationic sites] /[number of cationic sites + number of anionic sites] is between 0.1 and 0.6, and, more particularly, between 0.1 and 0.4.

9. Pigments according to any one of the preceding claims, characterised in that they have a BET specific surface of between 1 and 300 m$^2$/g.

10. Pigments according to Claim 9, characterised in that said BET surface is between 60 and 200 m$^2$/g.

11. Pigments according to any one of the preceding claims, characterised in that they have an oil sample DBP of between 10 and 500 cm$^3$/100 g.

12. Pigments according to Claim 11, characterised in that said oil sample is between 100 and 400 cm$^3$/100 g.

13. Pigments according to any one of the preceding claims, characterised in that they have a pore volume of between 1 and 10 cm$^3$/g.

14. Pigments according to Claim 13, characterised in that said pore volume is between 2 and 5 cm$^3$/g.

15. Pigments according to any one of the preceding claims, characterised in that they contain at least one metallic element which is at least divalent and which is chemically bonded to their surface.

16. Pigments according to Claim 15, characterised in that the content by weight of metallic element is between 0.01 and 30%.

17. Pigments according to Claim 16, characterised in that said content is between 0.5 and 5% by weight.

18. Pigments according to any one of Claims 15 to 17, characterised in that said metallic element is selected from the alkaline earths, rare earths, yttrium, titanium, zirconium, iron, nickel, zinc and aluminium.

19. Pigments according to Claim 18, characterised in that said metallic element is aluminium.

20. Pigments according to any one of the preceding claims, characterised in that an amorphous silico-aluminate of synthesis in involved.

21. Pigments according to any one of the preceding claims, characterised in that they are constituted by a silico-aluminate support coated with a fine layer of precipitated silica.

22. A process for the synthesis of pigments based on silico-aluminates, as defined, in particular, in any one of the preceding claims, characterised in that it consists (a) in subjecting a suspension of pigments based on silico-aluminates with a maximum pH of 8 to a treatment with an organic or inorganic salt of a metallic element which is at least divalent, (b) and then, following this treatment, in increasing the pH of the reaction medium to a value which is greater than or equal to 3.5, (c) in then separating the pigments based on silico-aluminates from said medium, and (d) in finally drying the pigments based on silico-aluminates obtained.

23. A process according to Claim 22, characterised in that said suspension of pigments based on silico-aluminates has been obtained by placing in suspension a powder of natural or presynthesised silico-aluminates which may be followed by a step for the precipitation of the silica on the surface of said alumino-silicate.

24. A process according to Claim 22, characterised in that said silica suspension was obtained by crumbling a filter cake resulting from a silico-aluminate precipitation reaction, optionally followed by a step for the precipitation of silica on the surface of said alumino-silicate.

25. A process according to Claim 22, characterised in that said silica suspension is the suspension which is directly obtained from a silico-aluminate precipitation reaction, optionally followed by a silica precipitation step on the surface of said alumino-silicate.

20

26. A process according to any one of Claims 22 to 25, characterised in that said organic salt is selected from salts of carboxylic and polycarboxylic acids, and said inorganic salt is selected from halides, oxyhalides, nitrates, phosphates, sulphates and oxysulphates.

27. A process according to any one of Claims 22 to 26, characterised in that said metallic element which is at least divalent is selected from alkaline earths, rare earths, yttrium, titanium, zirconium, iron, nickel, zinc and aluminium.

28. A process according to Claim 27, characterised in that the metallic element which is at least divalent is aluminium.

29. A process according to any one of Claims 22 to 28, characterised in that said treatment is carried out at a temperature of between ambient temperature and 100°C, preferably at a temperature of between 60 and 80°C.

30. A process according to any one of Claims 22 to 29, characterised in that after step (b), the reaction medium undergoes ageing.

31. A process according to any one of Claims 22 to 30, characterised in that after step (b), possibly followed by ageing, the pH of the reaction medium is adjusted in such a way as to fix the pH of the final pigments based on silico-aluminates.

32. Pigments based on silico-aluminates which are capable of being obtained by way of a process such as that defined in any one of Claims 22 to 31.

33. Pigments based on silico-aluminates obtained by way of a process such as defined in any one of Claims 22 to 31.

34. A suspension of pigments based on silico-aluminates, characterised in that it comprises pigments based on silico-aluminates such as defined in any one of Claims 1 to 21, 32 and 33.

35. A suspension of pigments based on silico-aluminates, as obtained after realisation of stage (b) and prior to the realisation of stage (c) of a process as defined in any one of Claims 22 to 31.

36. A suspension of pigments based on silico-aluminates, as obtained after realisation of step (c) and prior to realisation of step (d) of a process such as defined in any one of Claims 22 to 31.

37. Use of pigments based on silico-aluminates such as defined in any one of Claims 1 to 21, 32 and 33, as paper fillers.

38. Use of a suspension of pigments based on silico-aluminates such as defined in any one of Claims 34 to 36, as a paper coating bath.

**Claims for the following Contracting State : ES**

1. A process for the synthesis of pigments based on silico-aluminates having a surface chemistry such that the number of cationic sites, expressed in micromole/$m^2$ of surface, is greater than 0.05, characterised in that it consists (a) in subjecting a suspension of pigments based on silico-aluminates having a maximum pH of 8 to a treatment with an organic or inorganic salt of a metallic element which is at least divalent, (b) in then, after this treatment, increasing the pH of the reaction medium to a value which is greater than or equal to 3.5, (c) in then separating the pigments based on silico-aluminates of said medium, and (d) in then finally drying the pigments based on silico-aluminates obtained.

2. A process according to Claim 1, characterised in that said number of cationic sites is at least 0.1 micromole/$m^2$.

3. A process according to Claim 2, characterised in that said number of cationic sites is between 0.2 and 60 micromole/$m^2$.

4. A process according to any one of the preceding claims, characterised in that said synthesised pigments have a point zero charge (PZC) of between 2 and 9.

5. A process according to Claim 4, characterised in that said point zero charge is between 3 and 7.

6. A process according to any one of the preceding claims, characterised in that said synthesised pigments have a number of anionic sites, expressed in micromole/$m^2$ of surface, of between 5 and 120.

7. A process according to Claim 6, characterised in that said number of anionic sites is between 10 and 60 micromole/$m^2$.

8. A process according to any one of the preceding claims, characterised in that said synthesised pigments have a ratio [number of cationic sites]/[number of cationic sites + numbers of anionic sites] of between 0.1 and 0.6, and, more particularly, of between 0.1 and 0.4.

9. A process according to any one of the preceding claims, characterised in that said synthesised pigments have a BET specific surface of between 1 and 300 $m^2$/g.

10. A process according to Claim 9, characterised in that said BET surface is between 60 and 200 $m^2$/g.

11. A process according to any one of the preceding claims, characterised in that said pigments obtained have an oil sample DBP/100 g of between 10 and 500 $cm^3$/100 g.

12. A process according to Claim 11, characterised in that said oil sample is between 100 and 400 $cm^3$/100 g.

13. A process according to any one of the preceding claims, characterised in that said synthesised pigments have a pore volume of between 1 and 10 $cm^3$/g.

14. A process according to Claim 13, characterised in that said pore volume is between 2 and 5 $cm^3$/g.

15. A process according to any one of the preceding claims, characterised in that said synthesised pigments contain at least one metallic element which is at least divalent and which is chemically bonded to their surface.

16. A process according to Claim 15, characterised in that the content of metallic element is between 0.01 and 30% by weight.

17. A process according to Claim 16, characterised in that said content is between 0.5 and 5% by weight.

18. A process according to any one of Claims 15 to 17, characterised in that said metallic element is selected from the alkaline earths, rare earths, yttrium, titanium, zirconium, iron, nickel, zinc and aluminium.

19. A process according to Claim 18, characterised in that said metallic element is aluminium.

20. A process according to any one of the preceding claims, characterised in that said synthesised pigments are amorphous silico-aluminates of synthesis.

21. A process according to any one of the preceding claims, characterised in that said synthesised pigments are constituted by a silico-aluminate support coated with a fine layer of precipitated silica.

22. A process according to any one of Claims 1 to 21, characterised in that said suspension of pigments based on silico-aluminates has been obtained by placing in suspension a powder of natural or presynthesised silico-aluminates which may be followed by a step for the precipitation of the silica on the surface of said alumino-silicate.

**23.** A process according to any one of Claims 1 to 21, characterised in that said silica suspension has been obtained by disintegration of a filter cake resulting from a reaction for the precipitation of the silico-aluminate, optionally followed by a step for the precipitation of the silica at the surface of said alumino-silicate.

**24.** A process according to any one of Claims 1 to 21, characterised in that said silica suspension is the suspension obtained from a precipitation reaction of silico-aluminate, optionally followed by a step for the precipitation of silica at the surface of said alumino-silicate.

**25.** A process according to any one of Claims 1 to 24, characterised in that said organic salt is selected from carboxylic acids, oxyhalides, nitrates, phosphates, sulphates and oxysulphates.

**26.** A process according to any one of Claims 1 to 25, characterised in that said metallic element which is at least divalent is selected from alkaline earths, rare earths, yttrium, titanium, zirconium, iron, nickel, zinc and aluminium.

**27.** A process according to Claim 26, characterised in that the metallic element which is at least divalent is aluminium.

**28.** A process according to any one of Claims 1 to 27, characterised in that said treatment is carried out at a temperature between ambient temperature and 100°C, preferably at a temperature of between 60° and 80°C.

**29.** A process according to any one of Claims 1 to 28, characterised in that after step (b) the reaction medium undergoes ageing.

**30.** A process according to any one of Claims 1 to 29, characterised in that after step (b), possibly followed by ageing, the pH of the reaction medium is adjusted in such a way as to fix the pH of the final pigments based on silico-aluminates.

**31.** A suspension of pigments based on silico-aluminates, characterised in that it comprises pigments based on silico-aluminates obtained by way of a process such as defined in any one of Claims 1 to 30.

**32.** A suspension of pigments based on silico-aluminates such as obtained after realisation of step (b) and prior to realisation of step (c) of a process as defined in any one of Claims 1 to 30.

**33.** A suspension of pigments based on silico-aluminates such as obtained after realisation of step (c) and prior to realisation of step (d) of a process such as defined in any one of Claims 1 to 30.

**34.** Use of pigments based on silico-aluminates, obtained by way of a process such as defined in any one of Claims 1 to 30, as a paper filler.

**35.** Use of a suspension of pigments based on silico-aluminates, such as defined in any one of Claims 31 to 33, as a paper coating bath.

**Patentansprüche**
**Patentansprüche für folgende Vertragsstaaten : AT, CH, DE, FR, GB, IT, LI, NL, SE**

**1.** Pigmente auf der Basis von Aluminiumsilicaten,
dadurch **gekennzeichnet,** daß
sie eine solche Oberflächenchemie aufweisen, daß die Anzahl der kationischen Stellen, ausgedrückt in $\mu mol/m^2$ Oberfläche, mehr als 0,05 beträgt.

**2.** Pigmente nach Anspruch 1,
dadurch **gekennzeichnet,** daß
die Anzahl der kationischen Stellen mindestens 0,1 $\mu mol/m^2$ beträgt.

3. Pigmente nach Anspruch 2,
   dadurch **gekennzeichnet,** daß
   die Anzahl der kationischen Stellen 0,2 bis 60 $\mu$mol/m$^2$ beträgt.

4. Pigmente nach einem der vorangehenden Ansprüche,
   dadurch **gekennzeichnet,** daß
   der Null-Ladungspunkt (PZC) im Bereich von 2 bis 9 liegt.

5. Pigmente nach Anspruch 4,
   dadurch **gekennzeichnet,** daß
   der Null-Ladungspunkt im Bereich von 3 bis 7 liegt.

6. Pigmente nach einem der vorangehenden Ansprüche,
   dadurch **gekennzeichnet,** daß
   die Anzahl der anionischen Stellen, ausgedrückt in $\mu$mol/m$^2$ Oberfläche, 5 bis 120 beträgt.

7. Pigmente nach Anspruch 6,
   dadurch **gekennzeichnet,** daß
   die Anzahl der anionischen Stellen 10 bis 60 $\mu$mol/m$^2$ beträgt.

8. Pigmente nach einem der vorangehenden Ansprüche,
   dadurch **gekennzeichnet,** daß
   das Verhältnis von [Anzahl der kationischen Stellen]/[Anzahl der kationischen Stellen + Anzahl der anionischen Stellen] 0,1 bis 0,6, und insbesondere 0,1 bis 0,4 beträgt.

9. Pigmente nach einem der vorangehenden Ansprüche,
   dadurch **gekennzeichnet,** daß
   sie eine spezifische Oberfläche BET von 1 bis 300 m$^2$/g aufweisen.

10. Pigmente nach Anspruch 9,
    dadurch **gekennzeichnet,** daß
    ihre BET-Oberfläche 60 bis 200 m$^2$/g beträgt.

11. Pigmente nach einem der vorangehenden Ansprüche,
    dadurch **gekennzeichnet,** daß
    sie eine DBP-Ölaufnahme im Bereich von 10 bis 500 cm$^3$/100 g aufweisen.

12. Pigmente nach Anspruch 11,
    dadurch **gekennzeichnet,** daß
    die Ölaufnahme im Bereich von 100 bis 400 cm$^3$/100 g liegt.

13. Pigmente nach einem der vorangehenden Ansprüche,
    dadurch **gekennzeichnet,** daß
    sie ein Porenvolumen von 1 bis 10 cm$^3$/g aufweisen.

14. Pigmente nach Anspruch 13,
    dadurch **gekennzeichnet,** daß
    das Porenvolumen 2 bis 5 cm$^3$/g beträgt.

15. Pigmente nach einem der vorangehenden Ansprüche,
    dadurch **gekennzeichnet,** daß
    sie mindestens ein mindestens zweiwertiges metallisches Element enthalten, das chemisch an ihre Oberfläche gebunden ist.

16. Pigmente nach Anspruch 15,
    dadurch **gekennzeichnet,** daß
    der Gehalt an metallischem Element 0,01 bis 30 Gew.-% ausmacht.

**17.** Pigmente nach Anspruch 16,
dadurch **gekennzeichnet,** daß
dieser Gehalt im Bereich von 0,5 bis 5 Gew.- % liegt.

**18.** Pigmente nach einem der Ansprüche 15 bis 17,
dadurch **gekennzeichnet,** daß
das metallische Element unter den Erdalkalien, den Seltenen Erden, Yttrium, Titan, Zirkonium, Eisen, Nickel, Zink und Aluminium ausgewählt ist.

**19.** Pigmente nach Anspruch 18,
dadurch **gekennzeichnet,** daß
das metallische Element Aluminium ist.

**20.** Pigmente nach einem der vorangehenden Ansprüche,
dadurch **gekennzeichnet,** daß
es sich um ein synthetisches amorphes Aluminiumsilicat handelt.

**21.** Pigmente nach einem der vorangehenden Ansprüche,
dadurch **gekennzeichnet,** daß
sie aus einem Träger aus Aluminiumsilicat, überzogen mit einer dünnen Schicht gefällter Kieselsäure, bestehen.

**22.** Verfahren zur Synthese von Pigmenten auf der Basis von Aluminiumsilicaten, wie sie vor allem in einem der vorangehenden Ansprüche definiert sind,
dadurch **gekennzeichnet,** daß
es darin besteht, daß man (a) eine Suspension von Pigmenten auf der Basis von Aluminiumsilicaten, die einen pH-Wert von höchstens 8 aufweist, einer Behandlung mit einem organischen oder anorganischen Salz eines mindestens zweiwertigen metallischen Elementes unterwirft, (b) am Ende dieser Behandlung den pH-Wert des Reaktionsmediums auf einen Wert von über oder gleich 3,5 bringt, (c) darauf die Pigmente auf der Basis von Aluminiumsilicaten von dem Medium abtrennt, und (d) schließlich die erhaltenen Pigmente auf der Basis von Aluminiumsilicaten trocknet.

**23.** Verfahren nach Anspruch 22,
dadurch **gekennzeichnet,** daß
die Suspension von Pigmenten auf der Basis von Aluminiumsilicaten erhalten worden ist durch Suspendieren eines natürlichen oder vorsynthetisierten Pulvers von Aluminiumsilicaten, gegebenenfalls gefolgt von einer Stufe der Ausfällung von Kieselsäure auf die Oberfläche des Aluminiumsilicats.

**24.** Verfahren nach Anspruch 22,
dadurch **gekennzeichnet,** daß
die Kieselsäure-Suspension erhalten worden ist durch Zerteilen eines Filterkuchens aus der Ausfällungsreaktion von Aluminiumsilicat, gegebenenfalls gefolgt von einer Stufe der Ausfällung von Kieselsäure auf die Oberfläche des Aluminiumsilicats.

**25.** Verfahren nach einem der Ansprüche 1 bis 24,
dadurch **gekennzeichnet,** daß
das organische Salz unter den Salzen von Carbonsäuren, den Oxyhalogeniden, Nitraten, Phosphaten, Sulfaten und Oxysulfaten ausgewählt wird.

**26.** Verfahren nach einem der Ansprüche 22 bis 25,
dadurch **gekennzeichnet,** daß
das organische Salz unter den Salzen von Carbonsäuren und Polycarbonsäuren ausgewählt wird, und daß das anorganische Salz aus den Halogeniden, Oxyhalogeniden, Nitraten, Phosphaten, Sulfaten und Oxysulfaten ausgewählt wird.

**27.** Verfahren nach einem der Ansprüche 22 bis 26,
dadurch **gekennzeichnet,** daß
das mindestens zweiwertige metallische Element unter den Erdalkalien, Seltenen Erden, Yttrium, Titan, Zirkonium, Eisen, Nickel, Zink und Aluminium ausgewählt wird.

28. Verfahren nach Anspruch 27,
dadurch **gekennzeichnet,** daß
das mindestens zweiwertige metallische Element Aluminium ist.

29. Verfahren nach einem der Ansprüche 22 bis 28,
dadurch **gekennzeichnet,** daß
die Behandlung bei einer Temperatur im Bereich von Raumtemperatur bis 100° C, vorzugsweise bei
einer Temperatur im Bereich von 60°C bis 80° C, vorgenommen wird.

30. Verfahren nach einem der Ansprüche 22 bis 29,
dadurch **gekennzeichnet,** daß
man nach der Stufe (b) das Reaktionsmedium einer Reifung unterwirft.

31. Verfahren nach einem der Ansprüche 22 bis 30,
dadurch **gekennzeichnet,** daß
man nach der Stufe (b), und gegebenenfalls anschließendem Reifen, durch Einstellen des pH-Wertes
des Reaktionsmediums den pH-Wert der fertiggestellten Pigmente auf der Basis von Aluminiumsilicaten
festlegt.

32. Pigmente auf der Basis von Aluminiumsilicaten, die durch ein Verfahren wie in einem der Ansprüche 22
bis 31 beschrieben, erhalten werden können.

33. Pigmente auf der Basis von Aluminiumsilicaten, erhalten durch ein Verfahren wie in einem der
Ansprüche 22 bis 31 beschrieben.

34. Suspension von Pigmenten auf der Basis von Aluminiumsilicaten,
dadurch **gekennzeichnet,** daß
sie Pigmente auf der Basis von Aluminiumsilicaten, wie in einem der Ansprüche 1 bis 21, 32 und 33
definiert, enthält.

35. Suspension von Pigmenten auf der Basis von Aluminiumsilicaten, wie sie nach Durchführung der Stufe
(b) und vor Durchführung der Stufe (c) eines Verfahrens, wie in einem der Ansprüche 22 bis 31
definiert, erhalten worden ist.

36. Suspension von Pigmenten auf der Basis von Aluminiumsilicaten, wie sie nach Durchführung der Stufe
(c) und vor Durchführung der Stufe (d) eines Verfahrens, wie in einem der Ansprüche 22 bis 31
definiert, erhalten worden ist.

37. Verwendung von Pigmenten auf der Basis von Aluminiumsilicaten, wie in einem der Ansprüche 1 bis
21, 32 und 33 definiert, als Füllstoff für Papier.

38. Verwendung einer Suspension von Pigmenten auf der Basis von Aluminiumsilicaten, wie in einem der
Ansprüche 34 bis 36 definiert, als Streichbad für Papier.

**Patentansprüche für folgenden Vertragsstaat : ES**

1. Verfahren zur Herstellung von Pigmenten auf der Basis von Aluminiumsilicaten, sie eine solche
Oberflächenchemie aufweisen, daß die Aazahl der kationischen Stellen, ausgedrückt in $\mu mol/m^2$
Oberfläche, mehr als 0,05 beträgt,
dadurch **gekennzeichnet,** daß
es darin besteht, daß man (a) eine Suspension von Pigmenten auf der Basis von Aluminiumsilicaten,
die einen pH-Wert von höchstens 8 aufweist, einer Behandlung mit einem organischen oder anorganischen Salz eines mindestens zweiwertigen metallischen Elementes unterwirft, (b) am Ende dieser
Behandlung den pH-Wert des Reaktionsmediums auf einen Wert von über oder gleich 3,5 bringt, (c)
darauf die Pigmente auf der Basis von Aluminiumsilicaten von dem Medium abtrennt, und (d)
schließlich die erhaltenen Pigmente auf der Basis von Aluminiumsilicaten trocknet.

2. Verfahren nach Anspruch 1,
   dadurch **gekennzeichnet,** daß
   die Anzahl der kationischen Stellen mindestens 0,1 $\mu$mol/m$^2$ beträgt.

3. Verfahren nach Anspruch 2,
   dadurch **gekennzeichnet,** daß
   die Anzahl der kationischen Stellen 0,2 bis 60 $\mu$mol/m$^2$ beträgt.

4. Verfahren nach einem der vorangehenden Ansprüche,
   dadurch **gekennzeichnet,** daß
   die synthetisierten Pigmente einen Null-Ladungspunkt (PZC) im Bereich von 2 bis 9 aufweisen.

5. Verfahren nach Anspruch 4,
   dadurch **gekennzeichnet,** daß
   der Null-Ladungspunkt im Bereich von 3 bis 7 liegt.

6. Verfahren nach einem der vorangehenden Ansprüche,
   dadurch **gekennzeichnet,** daß
   die synthetisierten Pigmente eine Anzahl anionischer Stellen, ausgedrückt in $\mu$mol/m$^2$ Oberfläche, von 5 bis 120 aufweisen.

7. Verfahren nach Anspruch 6,
   dadurch **gekennzeichnet,** daß
   die Anzahl der anionischen Stellen 10 bis 60 $\mu$mol/m$^2$ beträgt.

8. Verfahren nach einem der vorangehenden Ansprüche,
   dadurch **gekennzeichnet,** daß
   das Verhältnis von [Anzahl der kationischen Stellen]/[Anzahl der kationischen Stellen + Anzahl der anionischen Stellen] 0,1 bis 0,6, und insbesondere 0,1 bis 0,4 beträgt.

9. Verfahren nach einem der vorangehenden Ansprüche,
   dadurch **gekennzeichnet,** daß
   die synthetisierten Pigmente eine spezifische Oberfläche BET von 1 bis 300 m$^2$/g aufweisen.

10. Verfahren nach Anspruch 9,
    dadurch **gekennzeichnet,** daß
    ihre BET-Oberfläche 60 bis 200 m$^2$/g beträgt.

11. Verfahren nach einem der vorangehenden Ansprüche,
    dadurch **gekennzeichnet,** daß
    die erhaltenen Pigmente eine DBP-Ölaufnahme im Bereich von 10 bis 500 cm$^3$/100 g aufweisen.

12. Verfahren nach Anspruch 11,
    dadurch **gekennzeichnet,** daß
    die Ölaufnahme im Bereich von 100 bis 400 cm$^3$/100 g liegt.

13. Verfahren nach einem der vorangehenden Ansprüche,
    dadurch **gekennzeichnet,** daß
    die synthetisierten Pigmente ein Porenvolumen von 1 bis 10 cm$^3$/g aufweisen.

14. Verfahren nach Anspruch 13,
    dadurch **gekennzeichnet,** daß
    das Porenvolumen 2 bis 5 cm$^3$/g beträgt.

15. Verfahren nach einem der vorangehenden Ansprüche,
    dadurch **gekennzeichnet,** daß
    die synthetisierten Pigmente mindestens ein mindestens zweiwertiges metallisches Element enthalten, das chemisch an ihre Oberfläche gebunden ist.

**16.** Verfahren nach Anspruch 15,
dadurch **gekennzeichnet,** daß
der Gehalt an metallischem Element 0,01 bis 30 Gew.-% ausmacht.

**17.** Verfahren nach Anspruch 16,
dadurch **gekennzeichnet,** daß
dieser Gehalt im Bereich von 0,5 bis 5 Gew.-% liegt.

**18.** Verfahren nach einem der Ansprüche 15 bis 17,
dadurch **gekennzeichnet,** daß
das metallische Element unter den Erdalkalien, den Seltenen Erden, Yttrium, Titan, Zirkonium, Eisen, Nickel, Zink und Aluminium ausgewählt wird.

**19.** Verfahren nach Anspruch 18,
dadurch **gekennzeichnet,** daß
das metallische Element Aluminium ist.

**20.** Verfahren nach einem der vorangehenden Ansprüche,
dadurch **gekennzeichnet,** daß
die synthetisierten Pigmente synthetische amorphe Aluminiumsilicate sind.

**21.** Verfahren nach einem der vorangehenden Ansprüche,
dadurch **gekennzeichnet,** daß
die synthetisierten Pigmente aus einem Träger aus Aluminiumsilicat, überzogen mit einer dünnen Schicht gefällter Kieselsäure, bestehen.

**22.** Verfahren nach einem der Ansprüche 1-21,
dadurch **gekennzeichnet,** daß
die Suspension von Pigmenten auf der Basis von Aluminiumsilicaten durch Suspendieren eines natürlichen oder vorsynthetisierten Pulvers von Aluminiumsilicaten, gegebenenfalls gefolgt von einer Stufe der Ausfällung von Kieselsäure auf die Oberfläche des Aluminiumsilicats, erhalten worden ist.

**23.** Verfahren nach einem der Ansprüche 1 bis 21,
dadurch **gekennzeichnet,** daß
die Kieselsäure-Suspension durch Zerteilen eines Filterkuchens aus der Ausfällungsreaktion von Aluminiumsilicat, gegebenenfalls gefolgt von einer Stufe der Ausfällung von Kieselsäure auf die Oberfläche des Aluminiumsilicats, erhalten worden ist.

**24.** Verfahren nach einem der Ansprüche 1 bis 21,
dadurch **gekennzeichnet,** daß
die Kieselsäure-Suspension die unmittelbar durch eine Ausfällungsreaktion von Aluminiumsilicat, gegebenenfalls gefolgt von einer Stufe der Ausfällung von Kieselsäure auf die Oberfläche des Aluminiumsilicats, erhaltene Suspension ist.

**25.** Verfahren nach einem der Ansprüche 1 bis 24,
dadurch **gekennzeichnet,** daß
das organische Salz unter den Salzen von Carbonsäuren und Polycarbonsäuren ausgewählt wird und daß das anorganische Salz aus den Halogeniden, Oxyhalogeniden, Nitraten, Phosphaten, Sulfaten und Oxysulfaten ausgewählt wird.

**26.** Verfahren nach einem der Ansprüche 1 bis 25,
dadurch **gekennzeichnet,** daß
das mindestens zweiwertige metallische Element unter den Erdalkalien, Seltenen Erden, Yttrium, Titan, Zirkonium, Eisen, Nickel, Zink und Aluminium ausgewählt wird.

**27.** Verfahren nach Anspruch 26,
dadurch **gekennzeichnet,** daß
das mindestens zweiwertige metallische Element Aluminium ist.

**28.** Verfahren nach einem der Ansprüche 1 bis 27,
dadurch **gekennzeichnet,** daß
die Behandlung bei einer Temperatur im Bereich von Raumtemperatur bis 100 ° C, vorzugsweise bei einer Temperatur im Bereich von 60 ° C bis 80 ° C, vorgenommen wird.

**29.** Verfahren nach einem der Ansprüche 1 bis 28,
dadurch **gekennzeichnet,** daß
man nach der Stufe (b) das Reaktionsmedium einer Reifung unterwirft.

**30.** Verfahren nach einem der Ansprüche 1 bis 29,
dadurch **gekennzeichnet,** daß
man nach der Stufe (b), und gegebenenfalls anschließendem Reifen, durch Einstellen des pH-Wertes des Reaktionsmediums den pH-Wert der fertiggestellten Pigmente auf der Basis von Aluminiumsilicaten festlegt.

**31.** Suspension von Pigmenten auf der Basis von Aluminiumsilicaten,
dadurch **gekennzeichnet,** daß
sie Pigmente auf der Basis von Aluminiumsilicaten, wie in einem der Ansprüche 1 bis 30 definiert, enthält.

**32.** Suspension von Pigmenten auf der Basis von Aluminiumsilicaten, wie sie nach Durchführung der Stufe (b) und vor Durchführung der Stufe (c) eines Verfahrens, wie in einem der Ansprüche 1 bis 30 definiert, erhalten worden ist.

**33.** Suspension von Pigmenten auf der Basis von Aluminiumsilicaten, wie sie nach Durchführung der Stufe (c) und vor Durchführung der Stufe (d) eines Verfahrens, wie in einem der Ansprüche 1 bis 30 definiert, erhalten worden ist.

**34.** Verwendung von Pigmenten auf der Basis von Aluminiumsilicaten, wie in einem der Ansprüche 1 bis 30 definiert, als Füllstoff für Papier.

**35.** Verwendung einer Suspension von Pigmenten auf der Basis von Aluminiumsilicaten, wie in einem der Ansprüche 31 bis 33 definiert, als Streichbad für Papier.